# EUROPEAN PATENT APPLICATION

(11) **EP 4 443 609 A1**
(43) Date of publication of application: **09.10.2024**
(21) Application number: 22939258.4
(22) Date of filing: 29.04.2022
(51) Int. Cl.: H01M 10/615

(54) **CONTROL METHOD FOR HEATING SYSTEM OF BATTERY, AND HEATING SYSTEM**

(71) Applicant: Contemporary Amperex Technology (Hong Kong) Limited, Central, Central And Western District (HK)
(72) Inventor: LI, Zhanliang, Ningde, Fujian 352100 (CN); ZHAO, Yuanmiao, Ningde, Fujian 352100 (CN); YAN, Yu, Ningde City, Fujian 352100 (CN); DAN, Zhimin, Ningde, Fujian 352100 (CN); HUANG, Xiaojian, Ningde, Fujian 352100 (CN); CHEN, Xinwei, Ningde, Fujian 352100 (CN)
(74) Representative: Frick, Robert
(86) International application number: PCT/CN2022/090432
(87) International publication number: WO 2023/206410

(57) **Abstract**

Disclosed is a control method (200) of a heating system (100) for a battery. The control method (200) includes: alternately controlling a switch module (120) to be in a first switch state within a first duration and in a second switch state within a second duration, wherein both the first duration and the second duration are 2T; discharging to a power supply module (110) by an energy storage module through a first loop within the first half time T of the first duration, and charging the energy storage module by the power supply module (110) through the first loop within the second half time T of the first duration; and discharging to the power supply module (110) by the energy storage module through a second loop within the first half time T of the second duration, and charging the energy storage module by the power supply module (110) through the second loop within the second half time T of the second duration, where the second loop differs from the first loop.

## Description

### FIELD OF TECHNOLOGY

The present application relates to the technical field of batteries, and particularly relates to a control method and a control circuit of a heating system for a battery, the heating system and an electric apparatus.

### BACKGROUND

With the advantages such as high energy density, cycle recharging, security and environmental protection, batteries are widely applied to the fields such as new energy vehicles, consumer electronics and energy storage systems.

However, the use of the batteries is limited in a low-temperature environment. For example, the batteries will bear a discharge capacity decrease at low temperature, even can not be charged and/or discharged, etc. Therefore, the batteries need to be heated in the low-temperature environment.

### SUMMARY

Embodiments of the present application provides a control method and a control circuit of a heating system for a battery, the heating system and an electric apparatus, which can realize heating of the battery.

In a first aspect, a control method of a heating system for a battery is provided. The heating system comprises an energy storage module, a switch module and a power supply module; the control method includes: alternately controlling the switch module to be in a first switch state within a first duration and in a second switch state within a second duration, both the first duration and the second duration being 2T; in the first switch state, forming a first loop among the power supply module, the switch module and the energy storage module, discharging to the power supply module by the energy storage module through the first loop within the first half time T of the first duration, and charging the energy storage module by the power supply module through the first loop within the second half time T of the first duration; and in the second switch state, forming a second loop among the power supply module, the switch module and the energy storage module, discharging to the power supply module by the energy storage module through the second loop within the first half time T of the second duration, and charging the energy storage module by the power supply module through the second loop within the second half time T of the second duration, the second loop differing from the first loop.

In the embodiment, the batteries can be heated by forming pulse current of discharging to the power supply module by the energy storage module and charging the energy storage module by the power supply module. In addition, the switch module is controlled to switch between the first switch state and the second switch state. In each switch state, the pulse current is formed to discharge to the power supply module by the energy storage module and charge the energy storage module by the power supply module. The switching frequency of the switch module can reach f/2, and the frequency of the pulse current can reach f. Therefore, the service life of the switch module can be prolonged, and temperature rise of a motor controller is greatly reduced.

In one possible implementation, the control method further includes: before alternately controlling the switch module to be in the first switch state within the first duration and in the second switch state within the second duration, controlling the switch module to be in a third switch state within a third duration, the third duration being T; in the third switch state, forming a third loop among the power supply module, the switch module and the energy storage module, charging the energy storage module by the power supply module through the third loop within the third duration, the third loop differing from a next loop of the third loop, and the next loop being a loop formed by the power supply module, the switch module and the energy storage module in a case that the switch module switched from the third switch state to another switch state.

In the embodiment, before alternately controlling the switch module to be in the first switch state and the second switch state, the switch module is controlled to be in the third switch state, and the duration of the third switch state is set to T, so that the power supply module can be controlled to charge the energy storage module to initial energy, and then the pulse current of discharging to the power supply module by the energy storage module and charging the energy storage module by the power supply module can be formed within the duration 2T of the second switch state and the third switch state alternately switched to produce heat for heating the battery. As a result, the switching frequency of the switch module can reach f/2, and the frequency of the pulse current can reach f. Thus, the service life of the switch module can be prolonged, and temperature rise of the motor controller is greatly reduced.

In one possible implementation, a next loop of the third loop is the first loop, and the third loop is the same as the second loop; or the next loop of the third loop is the second loop, and the third loop is the same as the first loop.

In the embodiment, as the switch states are switched just to prevent the power supply module from continuously charging the energy storage module, the third loop is set to be the same as a nonadjacent loop, which can reduce the control complexity of the heating system, and also helps to balance the usage rate of switches in the switch module.

In one possible implementation, the control method further includes: after alternately controlling the switch module to be in the first switch state within the first duration and in the second switch state within the second duration, controlling the switch module to be in a fourth switch state within a fourth duration, the fourth duration being T; after controlling the switch module to be in the fourth switch state, controlling all switches in the switch module to be turned off to stop heating the battery; in the fourth switch state, forming a fourth loop among the power supply module, the switch module and the energy storage module, and discharging to the power supply module by the energy storage module through the fourth loop within the fourth duration, the fourth loop differing from a previous loop of the fourth loop, and the previous loop being a loop formed by the power supply module, the switch module and the energy storage module in a case that the switch module is switched to another switch state of the fourth switch state.

In the embodiment, after stopping heating the battery and controlling the switch module to be switched alternately between the first switch state and the second switch state, the switch module is controlled to be in the fourth switch state, and the duration of the fourth switch state is set to T. This allows energy stored in the energy storage module charged by the power supply module in the second switch state or the third switch state to be released to 0, that is, the current of the energy storage module can be 0, thereby protecting the switch module against damage from electrical stress.

In one possible implementation, a previous loop of the fourth loop is the first loop, and the fourth loop is the same as the second loop; or the previous loop of the fourth loop is the second loop, and the fourth loop is the same as the first loop.

In the embodiment, as the switch states are switched just to prevent the power supply module from continuously charging the energy storage module, the fourth loop is set to be the same as a nonadjacent loop to reduce the control complexity of the heating system, and in addition, it helps to balance the usage rate of switches in the switch module.

In one possible implementation, the energy storage module comprises a plurality of windings in a first motor and at least one inductor, the switch module comprises a first bridge arm group and a second bridge arm group, and each bridge arm in the first bridge arm group and the second bridge arm group comprises upper and lower bridge arms separately; connection points of the upper and lower bridge arms of each bridge arm in the first bridge arm group are connected to each winding in the plurality of windings in one-to-one correspondence; connection points of the upper and lower bridge arms of each bridge arm in the second bridge arm group are connected to each inductor in the at least one inductor in one-to-one correspondence; both the first bridge arm group and the second bridge arm group are connected to the power supply module in parallel; the alternately controlling the switch module to be in the first switch state within the first duration and in the second switch state within the second duration includes: alternately controlling all lower bridge arms in the first bridge arm group to be turned on, all upper bridge arms in the first bridge arm group to be turned off, all upper bridge arms in the second bridge arm group to be turned on, and all lower bridge arms in the second bridge arm group to be turned off, and all the upper bridge arms in the first bridge arm group to be turned on, all the lower bridge arms in the first bridge arm group to be turned off, all the lower bridge arms in the second bridge arm group to be turned on, and all the upper bridge arms in the second bridge arm group to be turned off, wherein in the first switch state, a first loop is formed among the power supply module, all the lower bridge arms in the first bridge arm group, the plurality of windings, the at least one inductor and all the upper bridge arms in the second bridge arm group; and in the second switch state, a second loop is formed among the power supply module, all the upper bridge arms in the first bridge arm group, the plurality of windings, the at least one inductor and all the lower bridge arms in the second bridge arm group.

In the embodiment, the energy storage module reuses windings of a motor in an electric apparatus, so that the heating cost of the battery of the electric apparatus can be reduced.

In one possible implementation, the plurality of windings are all windings in the first motor, the at least one inductor is an external inductor independent of the first motor, and the at least one inductor is connected to a neutral point of the first motor.

In the embodiment, by controlling currents flowing through all the windings in the first motor to have the equal magnitude and the same phase, vibration noise generated during the period of heating the traction battery can be effectively suppressed by means of loops in the first motor. Meanwhile, the first motor is not allowed to run, the problem of overheating of a rotor in the motor can be solved, thereby prolonging the self-heating usage time of the battery.

In one possible implementation, the plurality of windings are all windings in the first motor, the at least one inductor is all windings in a second motor, and the neutral point of the first motor is connected to a neutral point of the second motor.

In the embodiment, by controlling currents flowing through all the windings in the first motor to have the equal magnitude and the same phase and currents flowing through all the windings in the second motor to have the equal magnitude and the same phase, vibration noise of the motors can be effectively suppressed when the traction battery is heated by means of loops of the first motor and the second motor. In addition, according to the heating system for the traction battery provided in the present application, the first motor and the second motor are not allowed to run, so the problem of overheating of rotors in the motors can be solved, and the self-heating usage time of the battery is prolonged.

In one possible implementation, the first motor is a three-phase motor.

In one possible implementation, the first motor is a six-phase motor, the plurality of windings are three windings in the six-phase motor, the at least one inductor is the other three windings in the six-phase motor, the spatial phase difference of the three windings is 120°, and the spatial phase difference of the three windings is 120°.

In the embodiment, by controlling the spatial phase difference of currents flowing through the three windings in the six-phase motor to be 120° and controlling the spatial phase difference of currents flowing through the other three windings in the six-phase motor to be 120°, vibration noise of the motors can be effectively suppressed when the traction battery is heated by means of loops of the six-phase motor. In addition, according to the traction battery heating system provided in the present application, the motors are not allowed to run, so the problem of overheating of the rotors in the motors can be solved, and the self-heating usage time of the battery is prolonged.

In one possible implementation, the controlling the switch module to be in the fourth switch state within the fourth duration includes: controlling the switch module to be in the fourth switch state within the fourth duration in the case of determining to stop heating the battery.

In the embodiment, the switch module can be controlled to be in the fourth switch state again in the case of determining to stop heating the battery, so that the energy stored in the energy storage module can be released to 0 to protect the switch module against damage from electrical stress.

In one possible implementation, the control method further includes: determining whether to stop heating the battery according to the temperature of the battery.

In the embodiment, by determining whether to stop heating the battery according to the temperature of the battery, a charging unit can be controlled in time to charge the battery to improve the charging efficiency.

In one possible implementation, the control method further includes: determining the first duration and/or the second duration on the basis of the temperature and/or the state of charge (SOC) of the battery.

In the embodiment, on the basis of the temperature and/or SOC of the battery, the first duration and/or the second duration can be dynamically adjusted to improve the heating efficiency of the battery.

In one possible implementation, the power supply module is the battery.

In a second aspect, a heating system for a battery is provided, and comprises an energy storage module, a switch module, a power supply module and a control module, and the control module is configured to perform the control methods in the first aspect and in any one possible implementation.

In a third aspect, a control circuit of a heating system for a battery is provided, and comprises a processor which is configured to perform the control methods in the first aspect and in any one possible implementation.

In a fourth aspect, an electric apparatus is provided, comprising a battery and the heating system for the battery in the second aspect, the heating system is configured to heat the battery, and the battery is configured to supply power to the electric apparatus.

### BRIEF DESCRIPTION OF THE DRAWINGS

FIG. 1 is a schematic circuit diagram of a heating system for a battery.
FIG. 2 is a schematic block diagram of a control method of the heating system for the battery according to an embodiment of the present application.
FIG. 3 is another schematic block diagram of the control method of the heating system for the battery according to an embodiment of the present application.
FIG. 4 is a schematic circuit diagram of the heating system for the battery according to an embodiment of the present application.
FIG. 5 is a schematic circuit diagram of another heating system for the battery according to an embodiment of the present application.
FIG. 6 is a schematic circuit diagram of more another heating system for the battery according to an embodiment of the present application.
FIG. 7 to FIG. 12 are schematic circuit diagrams corresponding to all stages in the control method of the heating system shown in FIG. 4 according to embodiments of the present application.
FIG. 13 to FIG. 18 are schematic circuit diagrams corresponding to all stages in the control method of the heating system shown in FIG. 5 according to embodiments of the present application.
FIG. 19 to FIG. 24 are schematic circuit diagrams corresponding to all stages in the control method of the heating system shown in FIG. 4 according to embodiments of the present application.
FIG. 25 is a sequence diagram of drive signal-pulse current in various switch states according to the embodiment of the present application.
FIG. 26 is a schematic block diagram of the heating system for the battery according to an embodiment of the present application.
FIG. 27 is a schematic block diagram of a control circuit of the heating system for the battery according to an embodiment of the present application.

### DETAILED DESCRIPTION OF EMBODIMENTS

Implementations of the present application are described in further detail below in conjunction with the accompanying drawings and embodiments. The following detailed description of the embodiments and the accompanying drawings are used to illustrate the principles of the present application, but are not intended to limit the scope of the present application, i.e., the present application is not limited to the described embodiments.

In description of the present application, it should be noted that, unless otherwise noted, "a plurality of': means two or more; orientation o positional relationships indicated by the terms "upper", "lower", "left", "right", "inner", "outer", and the like are only for convenience of description of the present application and simplification of description rather than indicating or implying that the referenced device or element must have a particular orientation, be constructed and operate in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within the allowable range of error. "Parallel" is not strictly parallel, but within the allowable range of error.

Orientation words appearing in the following description are all directions shown in the drawings, and do not limit the specific structure of the present application. In the description of the present application, it should also be noted that, unless otherwise expressly specified and limited, the terms "mounted", "connected" and "attached" should be understood in a broad sense, for example, it can be "fixedly connected" or "detachably connected", or "integrally connected"; it can be "directly connected" or "indirectly connected" through an intermediate medium. The specific meanings of the above terms in the present application may be understood by those of ordinary skill in the art depending on specific circumstances.

It should be noted that, the battery provided in the embodiments of the present application may be generally termed as a traction battery, specifically, may be a lithium-ion battery, a lithium-metal battery, a lead-acid battery, a nickel-cadmium battery, a nickel-hydrogen battery, a lithium-sulfur battery, a lithium-air battery, or a sodium-ion battery, and the like, which is not limited here. In terms of battery scale, the traction battery in the embodiment of the present application may be a cell/battery cell, may also be a battery module or a battery pack, which is not limited in the embodiment of the present application. In some application scenes, the battery can be applied to power units such as automobiles and ships. For example, the battery can be applied to an electric vehicle, as a motor of the car to supply power to a motor of the car, and as a power source of an electric car. The battery can also supply power to other electrical appliances in the electric car, for example, an air conditioner, a car player etc. in the car.

With the development of the times, a new energy vehicle, due to its advantages such as high environmental protection, low noise and low use cost, has a huge market prospect and can effectively promote energy conservation and emission reduction, and be beneficial to social development and progress.

Because of the electrochemical properties of the traction battery, in a low-temperature environment, the charging and discharging capacities of the traction battery are greatly limited, which seriously affects customers' driving experience in winter. Therefore, for normal use of the traction battery, it is required to heat the traction battery in the low-temperature environment.

For convenience of description, hereafter, application of the power traction to the new energy vehicle (electric vehicle) will be described as embodiments of the present application.

A driving motor and a control system thereof are one of key parts of the new energy vehicle, whose driving characteristics determine the main driving performance indexes of the vehicle. A motor driving system of the new energy vehicle is mainly composed of a motor, a power converter, an inverter, various kinds of detection sensors, a power source, etc. The motor is a rotating electromagnetic machine running based on the electromagnetic induction principle, which is used to convert electric energy to mechanical energy. While running, it absorbs electric power from an electric system, and outputs mechanical power to a mechanical system.

To avoid increasing unnecessary cost of heating the traction battery, now the commonly-used scheme is to heat the traction battery through loops of motors.

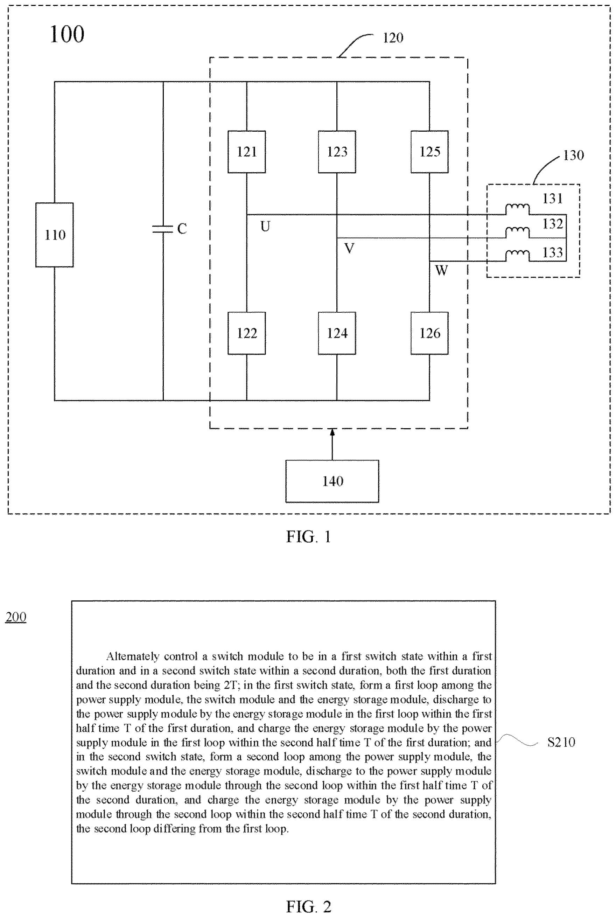

FIG. 1 is a circuit diagram of a heating system for a battery. As shown in FIG. 1, the heating system 100 can comprise a power supply module 110, a switch module 120 connected to the power supply module 110, and a motor 130 connected to the switch module 120.

The power supply module 110 can not only be realized by using the battery, but also can be realized by using an external power supply module, for example, a charging pile. Heating energy provided by the external power supply module, for example, can be output by an external direct-current charger, or can be output by an external alternating-current charger after being rectified, and this is not specifically limited.

The switch module 120 can be realized by using various types of switches. For example, the switch module 120 can be realized by the inverter in the motor driving system, wherein the inverter can be realized by a bridge arm switch of an insulated gate bipolar transistor (IGBT). Specifically, the number of bridge arms of the inverter is equal to that of windings in motor windings 130. For example, the motor 130 comprises three-phase windings, and the inverter comprises three-phase bridge arms, i.e., a U-phase bridge arm, a V-phase bridge arm and a W-phase bridge arm, wherein each bridge arm in the three-phase bridge arms each comprises upper and lower bridge arms which are each provided with a switch unit, i.e., the switch module 120 comprises an upper bridge arm switch 121 and a lower bridge arm switch 122 in the U-phase bridge arm, an upper bridge arm switch 123 and a lower bridge arm switch 124 in the V-phase bridge arm, and an upper bridge arm switch 125 and a lower bridge arm switch 126 in the W-phase bridge arm respectively.

The motor 130 may specifically comprise a winding 131 connected to the U-phase bridge arm, a winding 132 connected to the V-phase bridge arm and a winding 133 connected to the W-phase bridge arm, wherein one end of the winding 131 is connected to a connection point of the upper and lower bridge arms in the U-phase bridge arm, one end of the winding 132 is connected to a connection point of the upper and lower bridge arms in the V-phase bridge arm, and one end of the winding 133 is connected to a connection point of the upper and lower bridge arms in the W-phase bridge arm; and the other end of the winding 131, the other end of the winding 132 and the other end of the winding 133 are connected together.

It should be noted that, the motor 130 is not limited to a three-phase motor, and can also be a six-phase motor and the like, and correspondingly, the switch module 120 can also comprise the six-phase bridge arm.

In some embodiments, the heating system 100 further comprises a motor controller 140, which can modulate currents by controlling cyclic on-off of the switches in the switch module 120. For example, the motor controller 140 modulates the currents by controlling cyclic on-off of the target upper bridge arm switch and the target lower bridge arm switch in the inverter. In one example, if the target upper bridge arm switch is the upper bridge arm switch 121, the target lower bridge arm switch is the lower bridge arm switch 124 and/or the lower bridge arm switch 126. In another example, if the target upper bridge arm switch is the upper bridge arm switch 123, the target lower bridge arm switch is the lower bridge arm switch 122 and/or the lower bridge arm switch 126. In another example, if the target upper bridge arm switch is the upper bridge arm switch 125, the target lower bridge arm switch is the lower bridge arm switch 122 and/or the lower bridge arm switch 124.

It should be noted that, the target upper bridge arm switch and the lower bridge arm switch which are turned on and turned off cyclically in each cycle can be the same, and can also be different, which is not limited here. For example, in each cycle, both the upper bridge arm switch 121 and the lower bridge arm switch 124 are controlled to turn on and turn off. In another example, in the first cycle, the upper bridge arm switch 121 and the lower bridge arm switch 124 are controlled to turn on and turn off; in the second cycle, the upper bridge arm switch 123 and the lower bridge arm switch 122 are controlled to turn on and turn off; in the third cycle, the upper bridge arm switch 121, the lower bridge arm switch 124 and the lower bridge arm switch 126 are controlled to turn on and turn off, i.e., in different cycles, the controlled target upper and lower bridge arm switches can be different.

By controlling cyclic on-off of the target upper bridge arm switch and the target lower bridge arm switch, currents in different loops formed among the power supply module, the target upper bridge arm switch, the target lower bridge arm switch and the motor windings flow in different directions to generate pulse currents, i.e., to charge the motor windings by the power supply module and discharge the power supply module by the motor windings,

wherein the target turn-on switches include at least one upper bridge arm switch and at least one lower bridge arm switch, and the at least one upper bridge arm switch and the at least one lower bridge arm switch are located on the different bridge arms.

Optionally, the heating system 100 for the battery shown in FIG. 1 further comprises a capacitor C connected to the power supply module 110 in parallel, and the capacitor C mainly plays roles such as voltage stabilization and clutter filtering.

As described above, when the heating system 100 shown in FIG. 1 is used to heat the battery, if the frequency of the pulse current is required to reach f, the switching frequency of the switch module 120 also needs to reach f, and in other words, every time the direction of the pulse current changes, the switch module 120 has to be switched. It causes three parts of losses in the switch module 120 to be higher, namely turn-on losses, turn-off losses and driving losses. Temperature rise of the motor controller 140 will also be higher. The overall heat dissipation difficulty is increased.

In view of this, the embodiment of the present application provides a control method of a heating system for a battery, which includes: alternately controlling a switch module to be in a first switch state and a second switch state; and both in the first switch state and in the second switch state respectively, firstly, discharging from an energy storage module to a power supply module, and secondly, charging the energy storage module by the power supply module, thereby generating heat for heating a battery. Through the control method, the switching frequency of the switch module can reach f/2, and the frequency of the pulse current can reach f. Therefore, the service life of the switch module can be prolonged, and temperature rise of a motor controller is greatly reduced.

FIG. 2 is a schematic block diagram of a control method 200 of the heating system for the battery according to an embodiment of the present application. The heating system can comprise an energy storage module, a switch module and a power supply module. As shown in FIG. 2, the control method 200 can be performed by a motor controller. Further, the control method 200 can be performed in conjunction with a battery management system (BMS) and/or a vehicle control unit (VCU). Specifically, the control method 200 can include the following steps:

S210, alternately controlling the switch module to be in a first switch state within a first duration and in a second switch state within a second duration, both the first duration and the second duration being 2T.

In the first switch state, a first loop is formed among the power supply module, the switch module and the energy storage module, the energy storage module is discharged to the power supply module through the first loop within the first half time T of the first duration, and the energy storage module is charged by the power supply module through the first loop within the second half time T of the first duration; and in the second switch state, a second loop is formed among the power supply module, the switch module and the energy storage module, the energy storage module is discharged to the power supply module through the second loop within the first half time T of the second duration, the energy storage module is charged by the power supply module through the second loop within the second half time T of the second duration, and the second loop differs from the first loop.

The heating system applied to the control method 200 can be the heating system 100 shown in FIG. 1. Specifically, the power supply module can be the power supply module 110 shown in FIG. 1. For example, the power supply module can be a battery, and can also be other energy storage batteries or a direct-current power supply. The energy storage module can be the windings in the motor 130 shown in FIG. 1. The switch module can be the switch module 120 shown in FIG. 1.

Optionally, in addition to the motor windings, the energy storage module can be inductors independent of the motor. That is, the heating system applicable to the control method provided in the embodiment of the present application can use a driving motor on an electric apparatus such as an electric car to heat the battery during the operation of the electric apparatus.

In addition, as described above, the switch module can have a plurality of switches. Different switch states mean that the turned on switches in the switch module are different, leading to the loops formed among the power supply module, the switch module and the energy storage module being different. That is, the first loop differs from the second loop, and the first switch state differs from the second switch state.

It should be noted that, before performing the control method 200, the energy storage module in the heating system needs to have initial energy. That is, before performing the control method 200, the energy storage module has conditions to discharge to the power supply module. So when the control method 200 is performed, the energy storage module can be discharged to the power supply module whether within the first half time of the duration in the first switch state or within the first half time of the duration in the second switch state.

In the embodiments of the present application, the duration of the first switch state and the duration of the second switch state are equally divided into two parts, i.e., the duration 2T is equally divided into the first half time T and the second half time T. Within the first half time T, the energy storage module is discharged to the power supply module and within the second half time T, the energy storage module is charged by the power supply module to generate energy for heating the battery. It should be construed that, within the first half time T, the energy storage module needs to release stored initial energy to 0, and within the second half time T, the energy storage module needs to be charged to the initial energy. Thus, switching between discharging to the power supply module by the energy storage module and charging the energy storage module by the power supply module can be formed by controlling alternate switching of the switch module between the first switch state and the second switch state, which forms the pulse current described above, so as to generate the heat for heating the battery.

It should be construed that, in the first switch state or in the second switch state, pulse current to discharge to the power supply module by the energy storage module and charge the energy storage module by the power supply module can be formed, however, if the switch states are not switched, it will lead to the result of not automatically switching to discharging to the power supply module by the energy storage module after charging the energy storage module by the power supply module, and as a result, heat for heating the battery can not be continuously generated. That is, the switch states in the embodiments of the present application are switched to switch the direction of the pulse current from charging the energy storage module by the power supply module to discharging to the power supply module by the energy storage module.

Therefore, according to the control method of the heating system for the battery provided in the embodiments of the present application, the pulse current of discharging to the power supply module by the energy storage module and charging to the energy storage module by the power supply module can be formed so as to heat the battery. In addition, the switch module is controlled to switch between the first switch state and the second switch state. In each switch state, the pulse current is formed to discharge to the power supply module by the energy storage module and charge the energy storage module by the power supply module. The switching frequency of the switch module can reach f/2, and the frequency of the pulse current can reach f. Therefore, the service life of the switch module can be prolonged, and the temperature rise of a motor controller is greatly reduced.

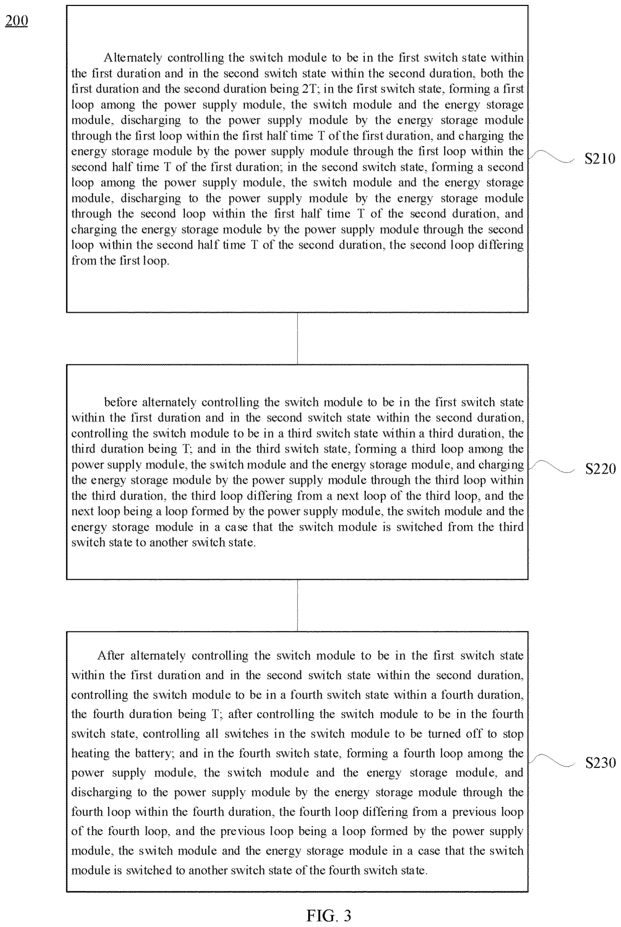

Optionally, as shown in FIG. 3, the control method 200 further includes: S220, before alternately controlling the switch module to be in the first switch state within the first duration and in the second switch state within the second duration, controlling the switch module to be in a third switch state within a third duration, the third duration being T; and in the third switch state, forming a third loop among the power supply module, the switch module and the energy storage module, and charging the energy storage module by the power supply module through the third loop within the third duration, the third loop differing from a next loop of the third loop. In an optional embodiment described above, the next loop can be a loop formed by the power supply module, the switch module and the energy storage module in a case that the switch module is switched from the third switch state to another switch state. That is, the switch module is changed from the third switch state to another switch state. In the another switch state, the loop formed by the power supply module, the switch module and the energy storage module is the next loop of the third loop. The another switch state refers to a switch state different from the third switch state.

As mentioned above, before performing the control method 200, the energy storage module in the heating system needs to have initial energy. Further, the initial energy can be obtained by controlling the switch module to charge the energy storage module by the power supply module before the switch module is switched alternately between the first switch state and the second switch state. Specifically, the switch module can be controlled to be in the third switch state to form a third loop differing from the first loop or the second loop. To ensure that the initial energy stored in the energy storage module is released to 0 within the first half time T of the above-mentioned duration 2T, the duration of the third switch state can be set to T. That is, within the duration T of the third switch state, the energy storage module is charged to the initial energy.

In the embodiment, before alternately controlling the switch module to be in the first switch state and the second switch state, the switch module is controlled to be in the third switch state, and the duration of the third switch state is set to T, so that the power supply module can be controlled to charge the energy storage module to initial energy, and then the pulse current of discharging to the power supply module by the energy storage module and charging the energy storage module by the power supply module can be formed within the duration 2T of the second switch state and the third switch state alternately switched to produce heat for heating the battery. As a result, the switching frequency of the switch module can reach f/2, and the frequency of the pulse current can reach f. Thus, the service life of the switch module can be prolonged, and temperature rise of the motor controller is greatly reduced.

Optionally, in the embodiment of the present application, a next loop of the third loop is the first loop, and the third loop is the same as the second loop; or the next loop of the third loop is the second loop, and the third loop is the same as the first loop.

Accordingly, if the switch module is switched from the third switch state to the first switch state, the third switch state is the same as the second switch state and differs from the first switch state; and if the switch module is switched from the third switch state to the second switch state, the third switch state is the same as the first switch state and differs from the second switch state.

In the embodiment, as the switch states are switched just to prevent the power supply module from continuously charging the energy storage module, the third loop is set to be the same as a nonadjacent loop, which can reduce the control complexity of the heating system, and also helps to balance the usage rate of switches in the switch module.

Optionally, the third loop differs from the first loop and the second loop. That is, the third switch state differs from the first switch state and the second switch state.

Optionally, as described in FIG. 3, the control method 200 further includes: S230, after alternately controlling the switch module to be in the first switch state within the first duration and in the second switch state within the second duration, controlling the switch module to be in a fourth switch state within a fourth duration, the fourth duration being T; after controlling the switch module to be in the fourth switch state, controlling all switches in the switch module to be turned off to stop heating the battery; and in the fourth switch state, forming a fourth loop among the power supply module, the switch module and the energy storage module, and discharging to the power supply module by the energy storage module through the fourth loop within the fourth duration, the fourth loop differing from a previous loop of the fourth loop. In an optional embodiment described above, the previous loop is a loop formed by the power supply module, the switch module and the energy storage in a case that the switch module is switched to another switch state of the fourth switch state. That is, the switch module is switched from another switch state to the fourth switch state. In the another switch state, the loop formed by the power supply module, the switch module and the energy storage module is the previous loop of the fourth loop.

Specifically, when it is required to stop heating the battery, whether the switch module is in the first switch state or the second switch state at the moment, the energy storage module is charged by the power supply module within the second half time T of the duration 2T. After the first switch state or the second switch state, the switch module is switched to the fourth switch state to control the energy storage module to discharge to the power supply module. Further, the duration of the fourth switch state can be set to T. Energy of the energy storage module can be released to 0 within the duration T of the fourth switch state. After the energy of the energy storage module is released to 0, all the switches in the switch module are turned off, so that a loop is not formed among the power supply module, the switch module and the energy storage module. At this time, the heating is ended.

Optionally, if a previous loop of the fourth loop is the first loop, the fourth loop differs from the first loop; and if the previous loop of the fourth loop is the second loop, the fourth loop differs from the second loop. In other words, if the switch module is switched from the first switch state to the fourth switch state, the fourth switch state differs from the first switch state; and if the switch module is switched from the second switch state to the fourth switch state, the fourth switch state differs from the second switch state.

In the embodiment, after stopping heating the battery and controlling the switch module to be switched alternately between the first switch state and the second switch state, the switch module is controlled to be in the fourth switch state, and the duration of the fourth switch state is set to T. This allows energy stored in the energy storage module charged by the power supply module in the second switch state or the third switch state to be released to 0, that is, the current of the energy storage module can be 0, thereby protecting the switch module against damage from electrical stress.

Optionally, in the embodiment of the present application, a previous loop of the fourth loop is the first loop, and the fourth loop is the same as the second loop; or the previous loop of the fourth loop is the second loop, and the fourth loop is the same as the first loop.

In other words, if the switch module is switched from the first switch state to the fourth switch state, the fourth switch state is the same as the second switch state; and if the switch module is switched from the second switch state to the fourth switch state, the fourth switch state is the same as the first switch state.

In the embodiment, as the switch states are switched just to prevent the power supply module from continuously charging the energy storage module, the fourth loop is set to be the same as a nonadjacent loop to reduce the control complexity of the heating system, and in addition, it helps to balance the usage rate of switches in the switch module.

That is, during the whole process of the control method 200, the switch module can be just switched between two switch states. The duration of the switch state at the beginning and the switch state at the end is only half of the duration of the switch state in the middle.

Optionally, the fourth loop differs from the first loop and the second loop. That is, the fourth switch state differs from the first switch state and the second switch state.

Optionally, in other embodiments, during the whole process of the control method 200, the switch state switched every time can be different. In an example of FIG. 1, in the first switch state, the upper bridge arm switch 121 and the lower bridge arm switch 124 are turned on, and the upper bridge arm switch 123, the upper bridge arm switch 125, the lower bridge arm switch 122 and the lower bridge arm switch 126 are turned off. In the second switch state, the upper bridge arm switch 123 and the lower bridge arm switch 126 are turned on, and the upper bridge arm switch 121, the upper bridge arm switch 125, the lower bridge arm switch 122 and the lower bridge arm switch 124 are turned off. In the third switch state, the upper bridge arm switch 121, the upper bridge arm switch 125 and the lower bridge arm switch 124 are turned on, and the upper bridge arm switch 123, the lower bridge arm switch 122 and the lower bridge arm switch 126 are turned off. In the fourth switch state, the upper bridge arm switch 121, the upper bridge arm switch 123 and the lower bridge arm switch 126 are turned on, and the upper bridge arm switch 125, the lower bridge arm switch 122 and the lower bridge arm switch 124 are turned off. Just the direction of the pulse current can be switched from charging the energy storage module by the power supply module to discharging to the power supply module by the energy storage module by switching the switch states, which is not limited in the embodiment of the present application.

Optionally, in the embodiment of the present application, the energy storage module comprises a plurality of windings in a first motor and at least one inductor, the switch module comprises a first bridge arm group and a second bridge arm group, each bridge arm in the first bridge arm group and the second bridge arm group comprises upper and lower bridge arms separately, connection points of the upper and lower bridge arms of each bridge arm in the first bridge arm group are connected to each winding in the plurality of windings in one-to-one correspondence, connection points of the upper and lower bridge arms of each bridge arm in the second bridge arm group are connected to each inductor in the at least one inductor in one-to-one correspondence, the plurality of windings are at least a portion of windings in the first motor, and both the first bridge arm group and the second bridge arm group are connected to the power supply module in parallel.

S210, the alternately controlling the switch module to be in the first switch state within the first duration and in the second switch state within the second duration, specifically includes: alternately controlling all the lower bridge arms in the first bridge arm group to be turned on, all the upper bridge arms in the first bridge arm group to be turned off, all the upper bridge arms in the second bridge arm group to be turned on, and all the lower bridge arms in the second bridge arm group to be turned off, and all the upper bridge arms in the first bridge arm group to be turned on, all the lower bridge arms in the first bridge arm group to be turned off, all the lower bridge arms in the second bridge arm group to be turned on, and all the upper bridge arms in the second bridge arm group to be turned off, wherein in the first switch state, a first loop is formed among the power supply module, all the lower bridge arms in the first bridge arm group, the plurality of windings, the at least one inductor and all the upper bridge arms in the second bridge arm group; and in the second switch state, a second loop is formed among the power supply module, all the upper bridge arms in the first bridge arm group, the plurality of windings, the at least one inductor and all the lower bridge arms in the second bridge arm group.

The order of the first switch state and the second switch state is not limited in the embodiment of the present application. That is, the switch module can be first in the first switch state and second in the second switch module, and can also be first in the second switch state and second in the first switch state.

In an example, under architecture of the heating system, in the first switch state, all the lower bridge arms in the first bridge arm group can be turned on, all the upper bridge arms in the first bridge arm group can be turned off, all the upper bridge arms in the second bridge arm group can be turned on, and all the lower bridge arms in the second bridge arm group can be turned off. In the second switch state, all the upper bridge arms in the first bridge arm group can be turned on, all the lower bridge arms in the first bridge arm group can be turned off, all the upper bridge arms in the second bridge arm group can be turned off, and all the lower bridge arms in the second bridge arm group can be turned on.

In another example, under architecture of the heating system, in the first switch state, all the upper bridge arms in the first bridge arm group can be turned on, all the lower bridge arms in the first bridge arm group can be turned off, all the upper bridge arms in the second bridge arm group can be turned off, and all the lower bridge arms in the second bridge arm group can be turned on; and in the second switch state, all the lower bridge arms in the first bridge arm group can be turned on, all the upper bridge arms in the first bridge arm group can be turned off, all the upper bridge arms in the second bridge arm group can be turned on, and all the lower bridge arms in the second bridge arm group can be turned off.

In the embodiment, the energy storage module reuses windings of a motor in an electric apparatus, so that the heating cost of the battery of the electric apparatus can be reduced.

In an example of a motor of the electric apparatus being a three-phase motor, magnetomotive force of a unilateral winding is pulsating magnetomotive force that is distributed in a ladder shape in space and alternates with time according to the variation of current. Magnetomotive force of the three unilateral windings in the three-phase motor is superposed to be a resultant magnetic field of the three-phase windings. Generally, for a traditional heating system, the magnitudes of currents flowing through three-phase windings in a three-phase motor in the heating process are not quite equal. The phase difference of currents flowing through two of the three-phase windings is 180°, and the magnitudes of two-phase currents without phase difference are equal. It will lead to the problems of asymmetrical three-phase currents flowing through the motor windings and loud vibration noise of the traction battery in the heating process due to high current frequency.

Therefore, improvements are made based on the heating system 100 shown in FIG. 1 to obtain the heating system in the embodiment of the present application. The loops are formed among the power supply module, the switch module, the motor windings and the at least one inductor by controlling the switch module, and the resultant magnetic field of the currents flowing through the motor windings is controlled to be 0-0.5T. As a result, the problem of big motor vibration during the process of heating the traction battery through motor loops can be effectively reduced.

In an example, the plurality of windings are all the windings in the first motor, and the at least one inductor is an external inductor independent of the first motor, and is connected to a neutral point of the first motor.

Optionally, the inductance value of the external inductor may be OH, i.e., the external inductor can be replaced with an external conductor.

Optionally, the switch module can be controlled to make currents flowing through the plurality of windings of the first motor equal in magnitude and the same in phase.

In the embodiment, the switch module is controlled to make the currents flowing through all the windings in the first motor equal in magnitude and the same in phase, so that vibration noise generated by the first motor during the period of heating the traction battery through the loops of the first motor can be effectively suppressed. Meanwhile, the first motor may not be allowed to run, so that the problem of overheating of a rotor in the motor can be solved, thereby prolonging the self-heating usage time of the battery.

In another example, the plurality of windings are all windings in the first motor, the at least one inductor is all windings in a second motor, and the neutral point of the first motor is connected to a neutral point of the second motor.

Optionally, the switch module can be controlled to make currents flowing through a plurality of windings of the first motor equal in magnitude and the same in phase and currents flowing through a plurality of windings of the second motor be equal in magnitude and the same in phase.

In the embodiment, by controlling the currents flowing through all the windings in the first motor to have the equal magnitude and the same phase and the currents flowing through all the windings in the second motor to have the equal magnitude and the same phase, vibration noise of the motors be effectively suppressed when the traction battery is heated through loops of the first motor and the second motor. In addition, according to the heating system provided in the present application, the first motor and the second motor are allowed to run, so that the problem of overheating of rotors in the motors is solved, and the self-heating usage time of the battery is prolonged.

In more another example, the first motor is a six-phase motor, the plurality of windings are three windings in the six-phase motor, the at least one inductor is the other three windings in the six-phase motor, the spatial phase difference of the three windings is 120°, and the spatial phase difference of the three windings is 120°.

In the embodiment, by controlling the spatial phase difference of currents flowing through the three windings in the six-phase motor to be 120° and controlling the spatial phase difference of currents flowing through the other three windings in the six-phase motor to be 120°, vibration noise of the motors can be effectively suppressed when the traction battery is heated through loops of the six-phase motor. In addition, according to the traction heating system provided in the present application, the motors may be allowed to run, so the problem of overheating of the rotors in the motors can be solved, and the self-heating usage time of the battery is prolonged.

In other embodiments, the first motor is a three-phase motor, and the second motor is a six-phase motor. The energy storage module may comprise three windings in the first motor and six windings in the second motor. Alternatively, the energy storage module may also comprise three windings in the first motor and three windings in the second motor, just making sure that the spatial phase difference of the three windings in the second motor in the loops is 120°.

Optionally, in the embodiment of the present application, the controlling the switch module to be in the fourth switch state within the fourth duration includes: controlling the switch module to be in the fourth switch state within the fourth duration in the case of determining to stop heating the battery.

In the embodiment, the switch module can be controlled to be in the fourth switch state in the case of determining to stop heating the battery, and the energy stored in the energy storage module can be released to 0 to protect the switch module against damage from electrical stress.

Optionally, in the embodiment of the present application, the control method 200 further includes: determining whether to stop heating the battery according to the temperature of the battery.

During the process of heating the battery through the heating system, the temperature of the battery can be detected in real time. In a case that the battery undergoes a temperature rise and can be charged, it can be determined to stop heating the battery.

For example, When VCU receives a heating request sent from BMS, VCU can send a first control signal to a motor controller, and the first control signal is configured to indicate to heat the battery, i.e., the first control signal is configured to indicate a motor controller to drive the switch module to be switched in various switch states mentioned above. When determining to reach the required temperature of the battery, BMS sends a heating stop request to VCU, VCU may send a second control signal to the motor controller, and the second control signal is configured to indicate to stop heating the battery, i.e., the first control signal indicates the motor controller to drive all the switches in the switch module to be turned off.

In the embodiment, by determining whether to stop heating the battery according to the temperature of the battery, a charging unit can be controlled in time to charge the battery to improve the charging efficiency.

Optionally, in the embodiment of the present application, the control method 200 further includes: determining the first duration and/or the second duration on the basis of the temperature and/or the state of charge (SOC) of the battery.

Specifically, when it is determined that the battery needs to be heated, a heating request for the battery can be acquired, and the heating request may contain the frequency of pulse current, namely the frequency of switching between charging the energy storage module by the power supply module and discharging to the power supply module by the energy storage module. The frequency may be adjusted dynamically according to the temperature and/or SOC of the battery. More specifically, a pulse current frequency requirement corresponding to different temperatures and different SOCs may be set in BMS or VCU. The pulse current frequency requirement refers to the minimum frequency of switching between charging the energy storage module by the power supply module and discharging to the power supply module by the energy storage module. Further, in a case of acquiring the pulse current frequency requirement, the frequency of the pulse current can be determined. As the frequency of the pulse current is twice as high as the switching frequency of the first switch state and the second switch state, the first duration and the second duration can be determined.

In the embodiment, based on the temperature and/or SOC of the battery, the first duration and/or the second duration can be dynamically adjusted to improve the heating efficiency of the battery.

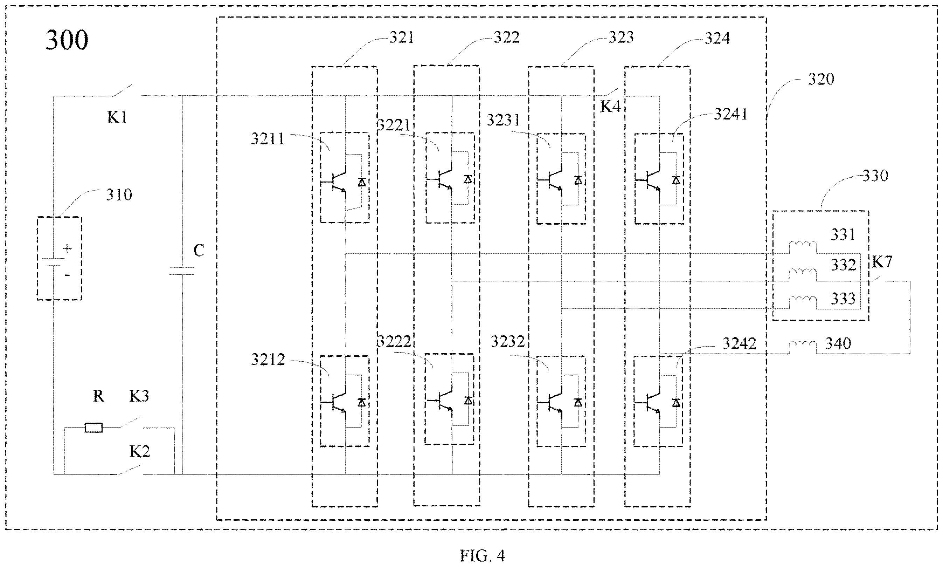

The schematic circuit diagrams of three heating systems applicable to the embodiments of the present application are described in detail below with reference to FIG. 4 to FIG. 6.

FIG. 4 is a schematic circuit diagram of a heating system 300. As shown in FIG. 4, the heating system 300 comprises a power supply module 310, a switch module 320, a motor 330 and an inductor 340.

The power supply module 310 may be a traction battery, an energy storage battery or another direct-current power supply. The switch module 320 comprises a first bridge arm 321, a second bridge arm 322, a third bridge arm 323 and a fourth bridge arm 324. Each bridge arm in the switch module 320 comprises upper and lower bridge arms. For example, the first bridge arm 321 comprises an upper bridge arm 3211 and a lower bridge arm 3212, the second bridge arm 322 comprises an upper bridge arm 3221 and a lower bridge arm 3222, the third bridge arm 323 comprises an upper bridge arm 3231 and a lower bridge arm 3232, and the fourth bridge arm 324 comprises an upper bridge arm 3241 and a lower bridge arm 3242. The motor 330 comprises a winding 331, a winding 332 and a winding 333. The inductor 340 is independent of an external inductor of the motor 330.

As shown in FIG. 4, a connection point of the upper bridge arm 3211 and the lower bridge arm 3212 of the first bridge arm 321 is connected to one end of the winding 331; a connection point of the upper bridge arm 3221 and the lower bridge arm 3222 of the second bridge arm 322 is connected to one end of the winding 332; a connection point of the upper bridge arm 3231 and the lower bridge arm 3232 of the third bridge arm 323 is connected to one end of the winding 333; a connection point of the upper bridge arm 3241 and the lower bridge arm 3242 of the fourth bridge arm 324 is connected to one end of the inductor 340; and the other end of the winding 331, the other end of the winding 332, the other end of the winding 333 and the other end of the inductor 340 are connected.

Optionally, when the power supply module 310 is a battery, the heating system 300 may also comprise a relay K1 and a relay K2, wherein the relay K1 and the relay K2 can be turned on and turned off to control to complete high-voltage power-on of an electric apparatus; and the heating system 300 may also comprise a pre-charging resistor R and a pre-charging relay K3, and the battery can be precharged by controlling the pre-charging relay K3 to be turned on and turned off.

Optionally, as shown in FIG. 4, the heating system 300 may also comprise a relay K4 and/or a relay K7. When the fourth bridge arm 324 fails, it is guaranteed that a motor controller can normally control the electric apparatus by turning off the relay K4. Owing to the existence of the relay K7, an external power supply can be connected to the left side of the relay K7. By turning off the relay K7 in conjunction with the windings of the motor 330, the external power supply can realize voltage step-up or step-down to charge the battery.

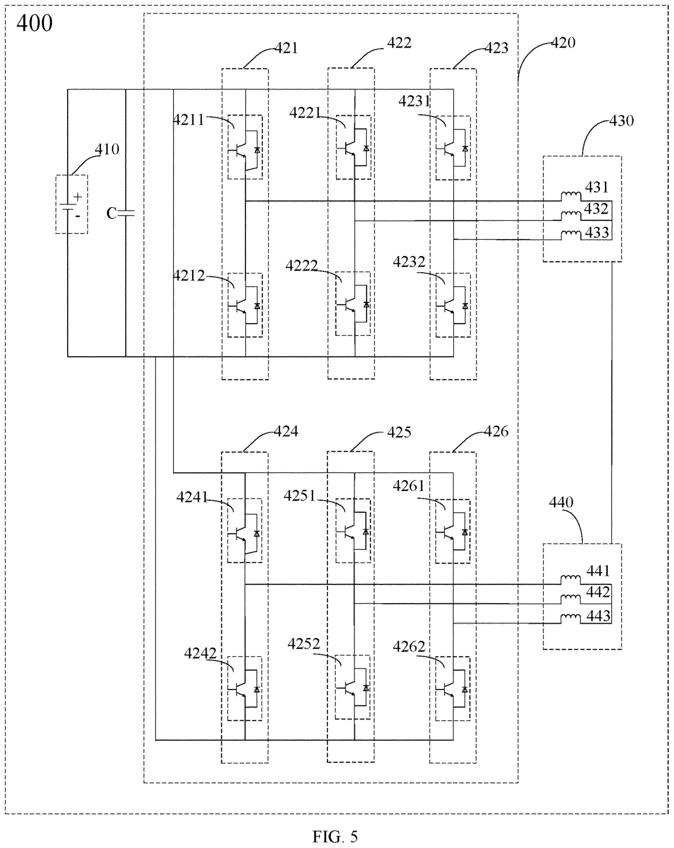

FIG. 5 is a schematic circuit diagram of another heating system 400. As shown in FIG. 5, the heating system 400 may comprise a power supply module 410, a switch module 420, a first motor 430 and a second motor 440.

The power supply module 410 may be a traction battery, an energy storage battery or another direct-current power supply. The switch module 420 comprises a first bridge arm 421, a second bridge arm 422, a third bridge arm 423, a fourth bridge arm 424, a fifth bridge arm 425 and a sixth bridge arm 426. Each bridge arm in the switch module 420 comprises upper and lower bridge arms. For example, the first bridge arm 421 comprises an upper bridge arm 4211 and a lower bridge arm 4212, the second bridge arm 422 comprises an upper bridge arm 4221 and a lower bridge arm 4222, the third bridge arm 423 comprises an upper bridge arm 4231 and a lower bridge arm 4232, and the fourth bridge arm 424 comprises an upper bridge arm 4241 and a lower bridge arm 4242, the fifth bridge arm 425 comprises an upper bridge arm 4251 and a lower bridge arm 4252, and the sixth bridge arm 426 comprises an upper bridge arm 4261 and a lower bridge arm 4262. The first motor 430 comprises a winding 431, a winding 432 and a winding 433. The second motor 440 comprises a winding 441, a winding 442 and a winding 443.

As shown in FIG. 5, a connection point of the upper bridge arm 4211 and the lower bridge arm 4212 of the first bridge arm 421 is connected to one end of the winding 431; a connection point of the upper bridge arm 4221 and the lower bridge arm 4222 of the second bridge arm 422 is connected to one end of the winding 432; a connection point of the upper bridge arm 4231 and the lower bridge arm 4232 of the third bridge arm 423 is connected to one end of the winding 433; a connection point of the upper bridge arm 4241 and the lower bridge arm 4242 of the fourth bridge arm 424 is connected to one end of the winding 441; a connection point of the upper bridge arm 4251 and the lower bridge arm 4252 of the fifth bridge arm 425 is connected to one end of the winding 442; a connection point of the upper bridge arm 4261 and the lower bridge arm 4262 of the sixth bridge arm 426 is connected to one end of the winding 443; and the other end of the winding 431, the other end of the winding 432, the other end of the winding 433, the other end of the winding 441, the other end of the winding 442 and the other end of the winding 443 are connected together.

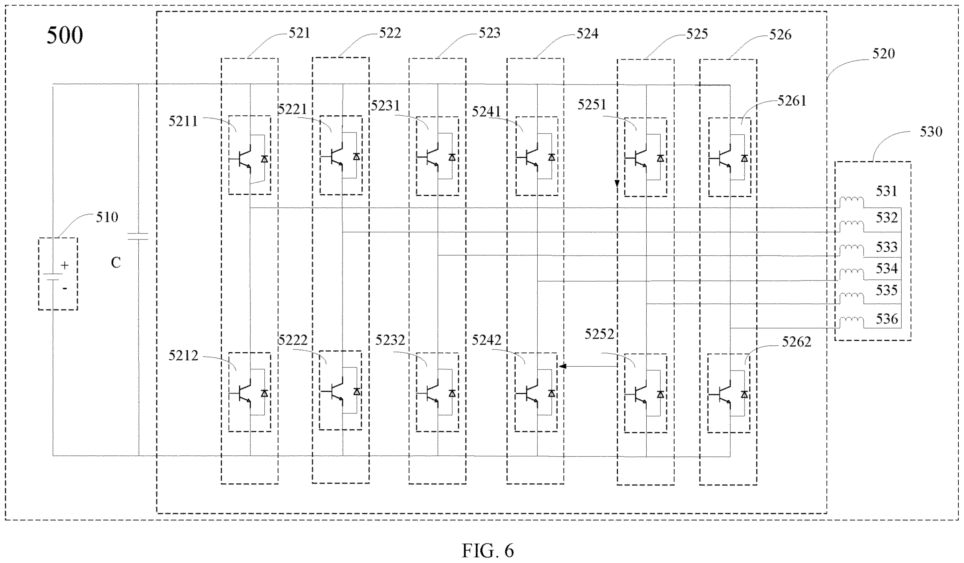

FIG. 6 is a schematic circuit diagram of more another heating system 500. As shown in FIG. 6, the heating system 500 may comprise a power supply module 510, a switch module 520, and a six-phase motor 530.

The power supply module 510 may be a traction battery, an energy storage battery or another direct-current power supply. The switch module 520 comprises a first bridge arm 521, a second bridge arm 522, a third bridge arm 523, a fourth bridge arm 524, a fifth bridge arm 525 and a sixth bridge arm 526. Each bridge arm in the switch module 520 comprises upper and lower bridge arms. For example, the first bridge arm 521 comprises an upper bridge arm 5211 and a lower bridge arm 5212, the second bridge arm 522 comprises an upper bridge arm 5221 and a lower bridge arm 5222, the third bridge arm 523 comprises an upper bridge arm 5231 and a lower bridge arm 5232, and the fourth bridge arm 524 comprises an upper bridge arm 5241 and a lower bridge arm 5242, the fifth bridge arm 525 comprises an upper bridge arm 5251 and a lower bridge arm 5252, and the sixth bridge arm 526 comprises an upper bridge arm 5261 and a lower bridge arm 5262. The six-phase motor 530 comprises a winding 531, a winding 532, a winding 533, a winding 534, a winding 535 and a winding 536.

As shown in FIG. 6, a connection point of the upper bridge arm 5211 and the lower bridge arm 5212 of the first bridge arm 521 is connected to one end of the winding 531; a connection point of the upper bridge arm 5221 and the lower bridge arm 5222 of the second bridge arm 522 is connected to one end of the winding 532; a connection point of the upper bridge arm 5231 and the lower bridge arm 5232 of the third bridge arm 523 is connected to one end of the winding 533; a connection point of the upper bridge arm 5251 and the lower bridge arm 5252 of the fourth bridge arm 525 is connected to one end of the winding 534; a connection point of the upper bridge arm 5251 and the lower bridge arm 5252 of the fifth bridge arm 525 is connected to one end of the winding 535; a connection point of the upper bridge arm 5261 and the lower bridge arm 5262 of the sixth bridge arm 526 is connected to one end of the winding 536; and the other end of the winding 531, the other end of the winding 532, the other end of the winding 533, the other end of the winding 534, the other end of the winding 535 and the other end of the winding 534 are connected together.

Optionally, the heating system for the battery shown in FIG. 4 to FIG. 6 further comprises a capacitor C connected to the power supply module in parallel, and the capacitor C mainly plays roles such as voltage stabilization and clutter filtering.

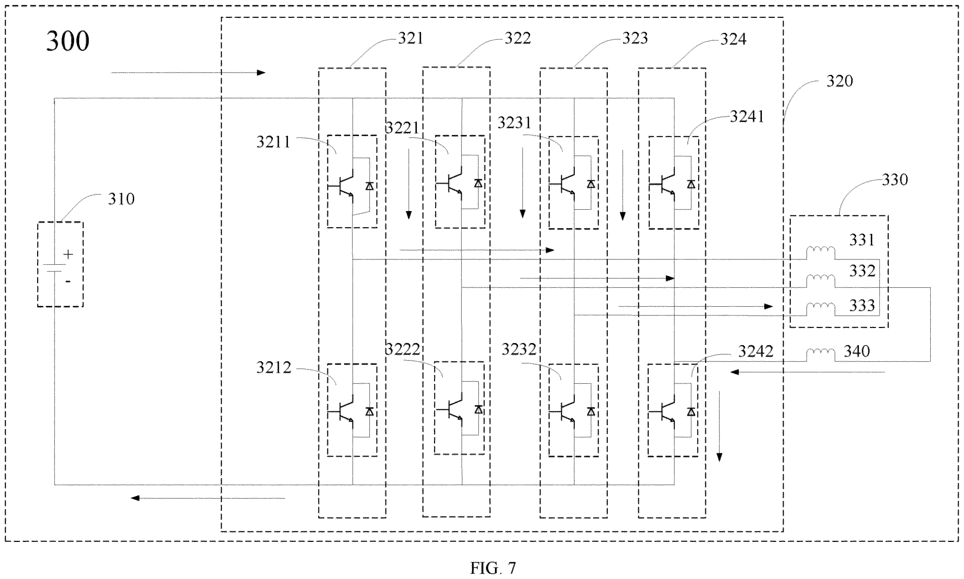

The control process of heating the battery through the heating systems in FIG. 4 to FIG. 6 will be described separately below. The control process includes Procedure 1, procedure 2, procedure 3 and procedure 4. Procedures 1 and 4 are performed only once, and Procedures 2 and 3 are performed alternately. Specifically, FIG. 7 to FIG. 12 correspond to the heating system 300 shown in FIG. 4, FIG. 13 to FIG. 18 correspond to the heating system 400 shown in FIG. 5, and FIG. 19 to FIG. 24 correspond to the heating system 500 shown in the FIG. 6.

The process of heating the battery by the heating system 300 shown in FIG. 4 may include the following content.

Procedure 1: controlling the upper bridge arm 3211 of the first bridge arm 321, the upper bridge arm 3221 of the second bridge arm 322, the upper bridge arm 3231 of the third bridge arm 323 and the lower bridge arm 3242 of the fourth bridge arm 324 to be turned on, and the lower bridge arm 3212 of the first bridge arm 321, the lower bridge arm 3222 of the second bridge arm 322, the lower bridge arm 3232 of the third bridge arm 323 and the upper bridge arm 3241 of the fourth bridge arm 324 to be turned off to form a loop among the power supply module 310, the upper bridge arm 3211 of the first bridge arm 321, the upper bridge arm 3221 of the second bridge arm 322, the upper bridge arm 3231 of the third bridge arm 323, the motor 330, the inductor 340 and the lower bridge arm 3242 of the fourth bridge arm 324. The power supply module 310 charges the windings and inductor 340 in the motor 330 through the loop, and the direction of current is shown in FIG. 7: 310(+),(3211/3221/3231),(331/332/333),(340),(3242),3 10(-).

Procedure 2: controlling the upper bridge arm 3211 of the first bridge arm 321, the upper bridge arm 3221 of the second bridge arm 322, the upper bridge arm 3231 of the third bridge arm 323 and the lower bridge arm 3242 of the fourth bridge arm 324 to be turned off, and the lower bridge arm 3212 of the first bridge arm 321, the lower bridge arm 3222 of the second bridge arm 322, the lower bridge arm 3232 of the third bridge arm 323 and the upper bridge arm 3241 of the fourth bridge arm 324 to be turned on to form a loop among the power supply module 310, the lower bridge arm 3212 of the first bridge arm 321, the lower bridge arm 3222 of the second bridge arm 322, the lower bridge arm 3232 of the third bridge arm 323, the first motor 330, the inductor 340 and the upper bridge arm 3241 of the fourth bridge arm 324.

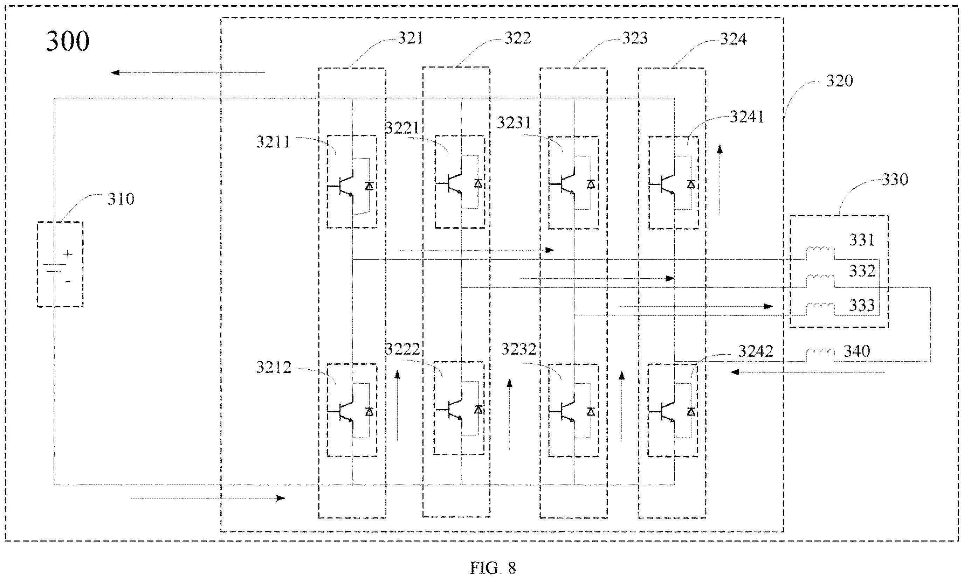

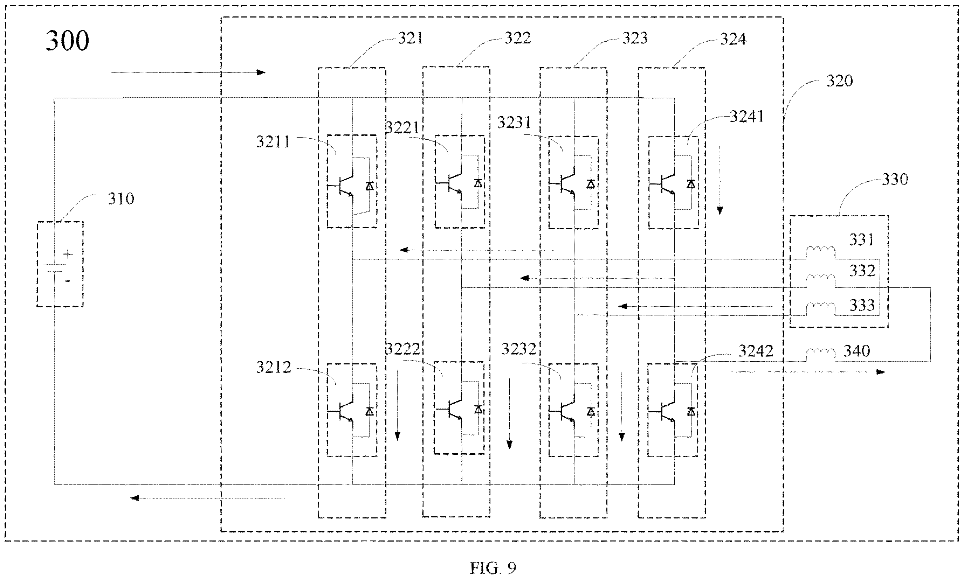

The duration of procedure 2 is twice as long as that of the procedure 1. Thus, the direction of the current in procedure 2 will be switched. Specifically, in the first half part of procedure 2, the windings of the motor 330 and the inductor 340 are discharged to the power supply module 310, and the direction of current is shown in FIG. 8: 310(-)→(3212/3222/3232)→(331/332/333)→(340)→(3241)→310(+); in the second half part of procedure 2, the windings of the motor 330 and the inductor 340 are charged by the power supply module 310, and the direction of current is shown in FIG. 9: 310(+)→(3212/3222/3232)→(331/332/333)→(340)→(3241)→310(-).

Procedure 3: controlling the upper bridge arm 3211 of the first bridge arm 321, the upper bridge arm 3221 of the second bridge arm 322, the upper bridge arm 3231 of the third bridge arm 323 and the lower bridge arm 3242 of the fourth bridge arm 324 to be turned on, and the lower bridge arm 3212 of the first bridge arm 321, the lower bridge arm 3222 of the second bridge arm 322, the lower bridge arm 3232 of the third bridge arm 323 and the upper bridge arm 3241 of the fourth bridge arm 324 to be turned off to form a loop among the power supply module 310, the upper bridge arm 3211 of the first bridge arm 321, the upper bridge arm 3221 of the second bridge arm 322, the upper bridge arm 3231 of the third bridge arm 323, the first motor 330, the inductor 340 and the lower bridge arm 3242 of the fourth bridge arm 324.

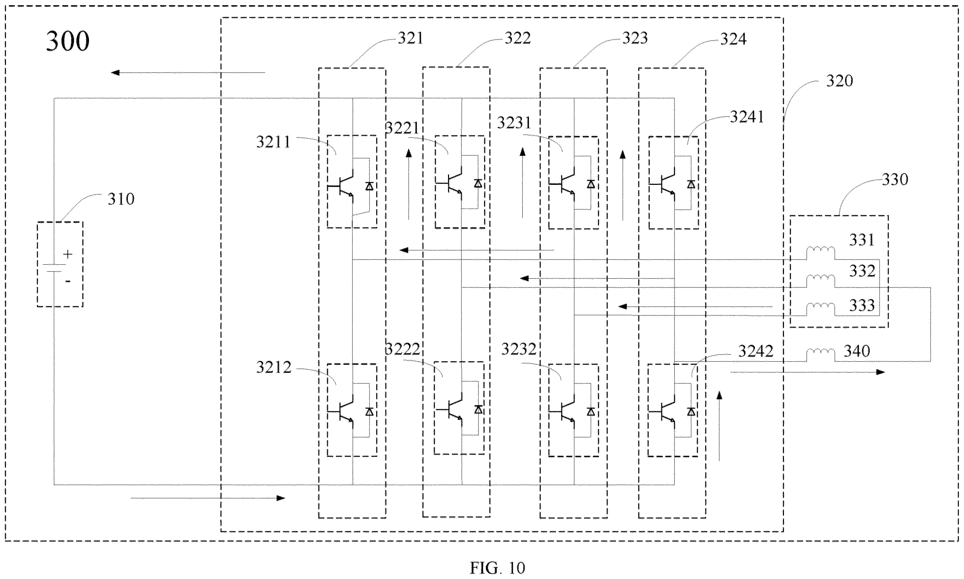

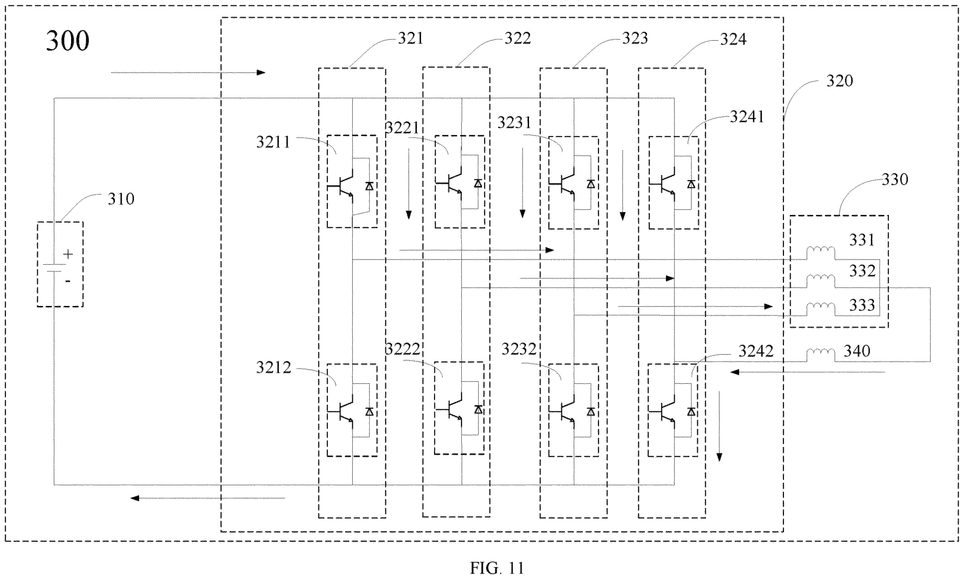

Similar to the procedure 2, as the duration of the procedure 3 is twice as long as that of the procedure 1, the direction of current will be switched in the procedure 3. Specifically, in the first half part of the procedure 2, the windings of the motor 330 and the inductor 340 are discharged to the power supply module 310, and the direction of current is shown as FIG. 10: 310(-)→(3211/3221/3231)→(331/332/333)→(340)→(3242)→310(+); and in the second half part of the procedure 2, the windings of the motor 330 and the inductor 340 are charged by the power supply module 310, and the direction of current is shown in FIG. 11: 310(+)→(3211/3221/3231)→(331/332/333)→(340)→(3242)→310(-).

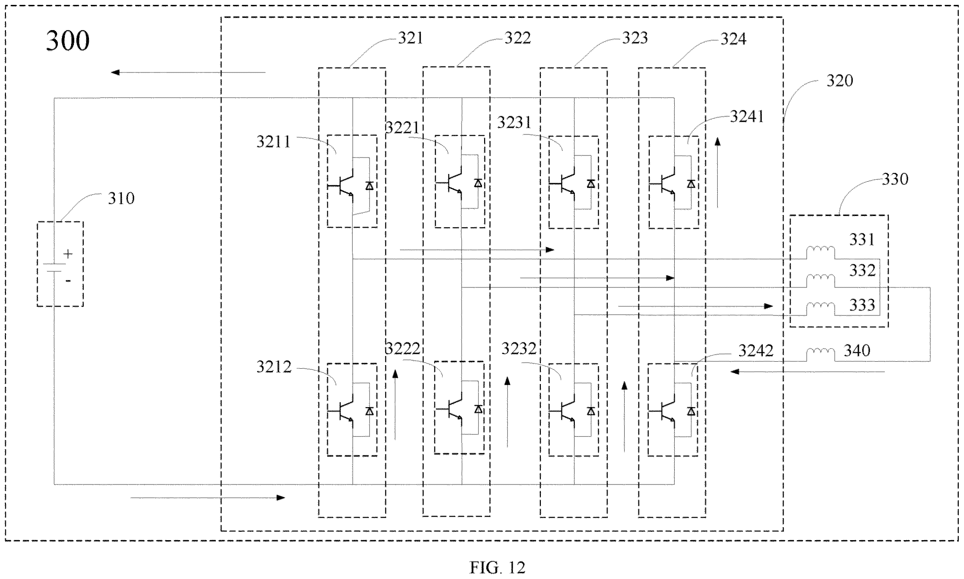

Procedure 4: controlling the upper bridge arm 3211 of the first bridge arm 321, the upper bridge arm 3221 of the second bridge arm 322, the upper bridge arm 3231 of the third bridge arm 323 and the lower bridge arm 3242 of the fourth bridge arm 324 to be turned off, and the lower bridge arm 3212 of the first bridge arm 321, the lower bridge arm 3222 of the second bridge arm 322, the lower bridge arm 3232 of the third bridge arm 323 and the upper bridge arm 3241 of the fourth bridge arm 324 to be turned on to form a loop among the power supply module 310, the lower bridge arm 3212 of the first bridge arm 321, the lower bridge arm 3222 of the second bridge arm 322, the lower bridge arm 3232 of the third bridge arm 323, the first motor 330, the inductor 340 and the upper bridge arm 3241 of the fourth bridge arm 324. The windings in the motor 330 and the inductor 340 are discharged to the power supply module 310 through the loop, and the direction of current is shown in FIG. 12: 310(-)→(3212/3222/3232)→(331/332/333)→(340)→(3241)→310(+).

The process of heating the battery by the heating system 400 shown in FIG. 5 may include the following content.

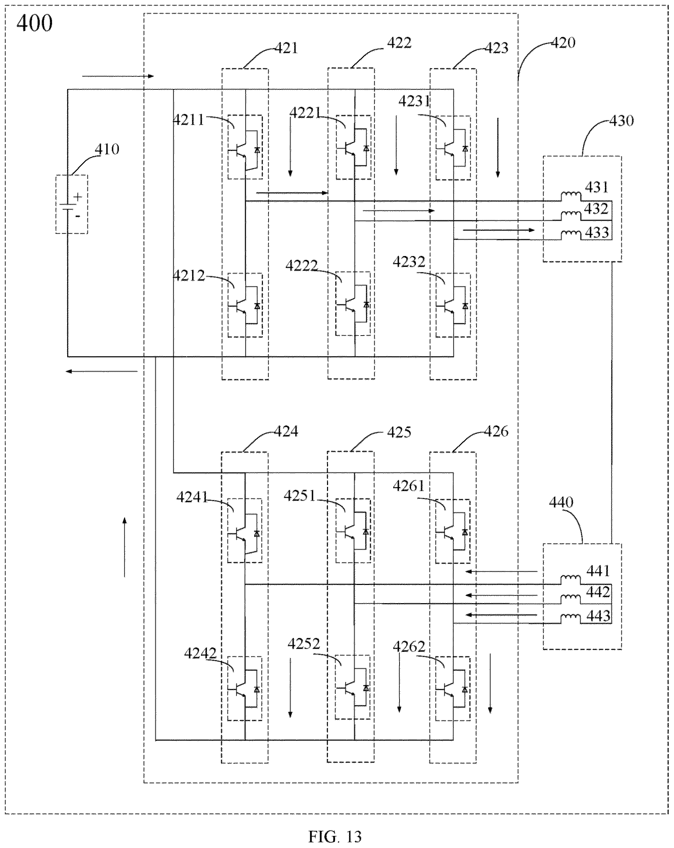

Procedure 1: controlling the upper bridge arm 4211 of the first bridge arm 421, the upper bridge arm 4221 of the second bridge arm 422, the upper bridge arm 4231 of the third bridge arm 423, the lower bridge arm 4242 of the fourth bridge arm 424, the lower bridge arm 4252 of the fifth bridge arm 425 and the lower bridge arm 4262 of the sixth bridge arm 426 to be turned on, and the lower bridge arm 4212 of the first bridge arm 421, the lower bridge arm 4222 of the second bridge arm 422, the lower bridge arm 4232 of the third bridge arm 423, the upper bridge arm 4241 of the fourth bridge arm 424, the upper bridge arm 4251 of the fifth bridge arm 425 and the upper bridge arm 4261 of the sixth bridge arm 426 to be turned off to form a loop among the power supply module 310, the upper bridge arm 3211 of the first bridge arm 321, the upper bridge arm 3221 of the second bridge arm 322, the upper bridge arm 3231 of the third bridge arm 323, the first motor 430, the second motor 440, the lower bridge arm 4242 of the fourth bridge arm 424, the lower bridge arm 4252 of the fifth bridge arm 425 and the lower bridge arm 4262 of the sixth bridge arm 426. The power supply module 410 charges the windings in the first motor 430 and the second motor 440 through the loop, and the direction of current is shown in FIG. 13: 410(+)→(4211/4221/4231)→(431/432/433)→(4242/4252/4262)→(441/442/443)→410(-).

Procedure 2: controlling the upper bridge arm 4211 of the first bridge arm 421, the upper bridge arm 4221 of the second bridge arm 422, the upper bridge arm 4231 of the third bridge arm 423, the lower bridge arm 4242 of the fourth bridge arm 424, the lower bridge arm 4252 of the fifth bridge arm 425 and the lower bridge arm 4262 of the sixth bridge arm 426 to be turned off, and the lower bridge arm 4212 of the first bridge arm 421, the lower bridge arm 4222 of the second bridge arm 422, the lower bridge arm 4232 of the third bridge arm 423, the upper bridge arm 4241 of the fourth bridge arm 424, the upper bridge arm 4251 of the fifth bridge arm 425 and the upper bridge arm 4261 of the sixth bridge arm 426 to be turned on to form a loop among the power supply module 310, the lower bridge arm 4212 of the first bridge arm 421, the lower bridge arm 4222 of the second bridge arm 422, the lower bridge arm 4232 of the third bridge arm 423, the first motor 430, the second motor 440, the upper bridge arm 4241 of the fourth bridge arm 424, the upper bridge arm 4251 of the fifth bridge arm 425 and the upper bridge arm 4261 of the sixth bridge arm 426.

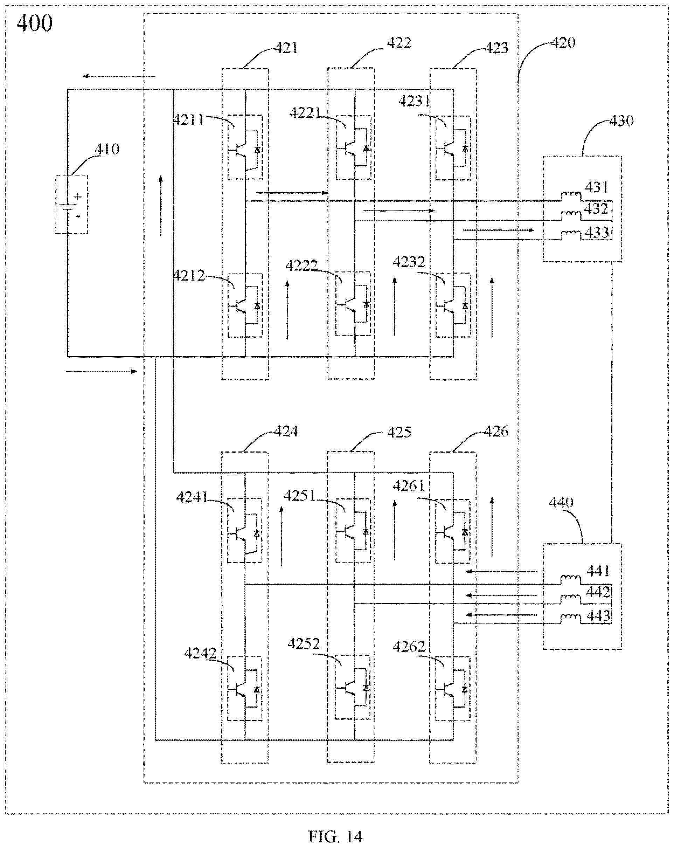

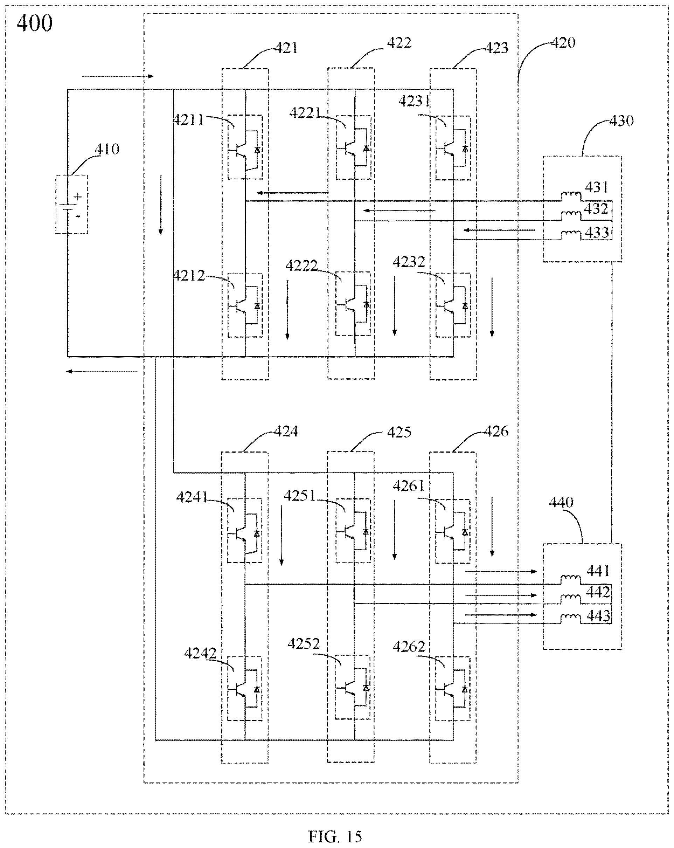

The duration of the procedure 2 is twice as long as that of the procedure 1. Thus, the direction of the current in the procedure 2 will be switched. Specifically, in the first half part of the procedure 2, the first motor 430 and the second motor 440 are discharged to the power supply module 310, and the direction of current is shown as FIG. 14: 410(-)→(4212/4222/4232)→(431/432/433)→(4241/4251/4261)→(441/442/443)→410(+); and in the second half part of the procedure 2, the first motor 430 and the second motor 440 are charged by the power supply module 410, and the direction of current is shown in FIG. 15: 410(+)→(4212/4222/4232)→(431/432/433)→(4241/4251/4261)→(441/442/443)→410(-).

Procedure 3: controlling the upper bridge arm 4211 of the first bridge arm 421, the upper bridge arm 4221 of the second bridge arm 422, the upper bridge arm 4231 of the third bridge arm 423, the lower bridge arm 4242 of the fourth bridge arm 424, the lower bridge arm 4252 of the fifth bridge arm 425 and the lower bridge arm 4262 of the sixth bridge arm 426 to be turned on, and the lower bridge arm 4212 of the first bridge arm 421, the lower bridge arm 4222 of the second bridge arm 422, the lower bridge arm 4232 of the third bridge arm 423, the upper bridge arm 4241 of the fourth bridge arm 424, the upper bridge arm 4251 of the fifth bridge arm 425 and the upper bridge arm 4261 of the sixth bridge arm 426 to be turned off to form a loop among the power supply module 310, the upper bridge arm 3211 of the first bridge arm 321, the upper bridge arm 3221 of the second bridge arm 322, the upper bridge arm 3231 of the third bridge arm 323, the first motor 430, the second motor 440, the lower bridge arm 4242 of the fourth bridge arm 424, the lower bridge arm 4252 of the fifth bridge arm 425 and the lower bridge arm 4262 of the sixth bridge arm 426.

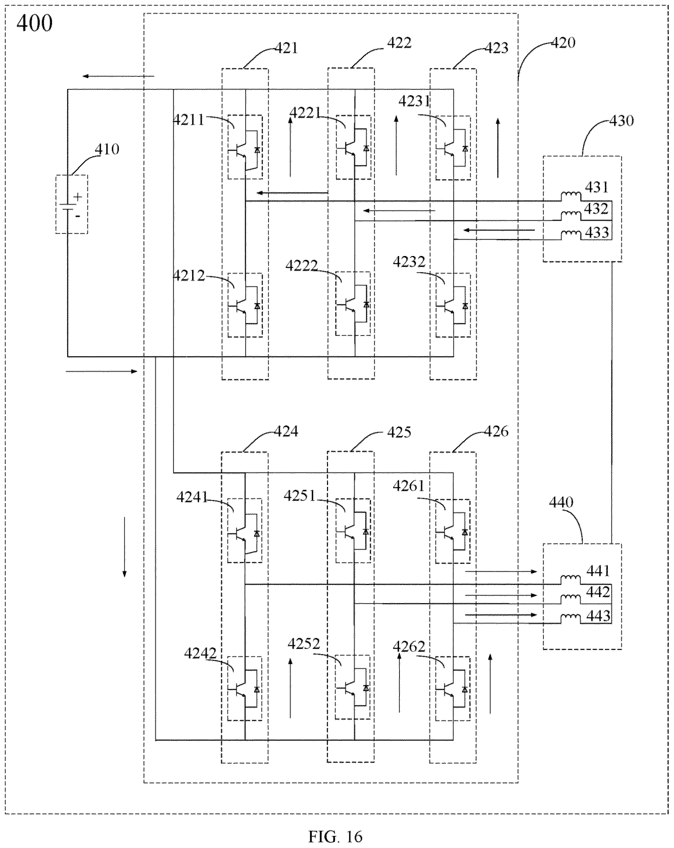

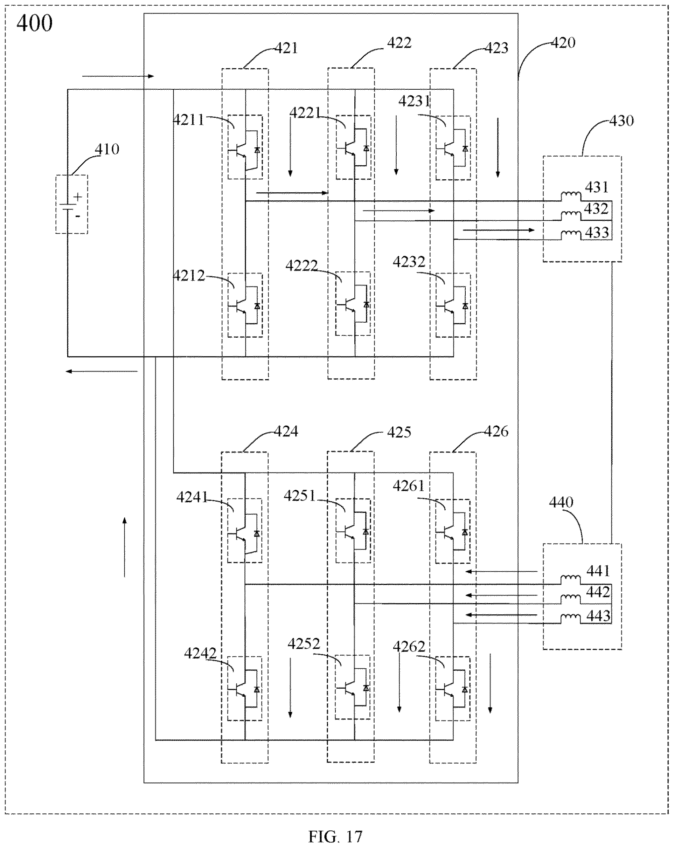

Similar to the procedure 2, as the duration of the procedure 3 is twice as long as that of the procedure 1, the direction of current will be switched in the procedure 3. Specifically, in the first half part of the procedure 3, the first motor 430 and the second motor 440 are discharged to the power supply module 310, and the direction of current is shown as FIG. 16: 410(-)→(4211/4221/4231)→(431/432/433)→(4242/4252/4262)→(441/442/443)→410(+); and in the second half part of the procedure 2, the first motor 430 and the second motor 440 are charged by the power supply module 410, and the direction of current is shown in FIG. 17: 410(+)→(4211/4221/4231)→(431/432/433)→(4242/4252/4262)→(441/442/443)→410(-).

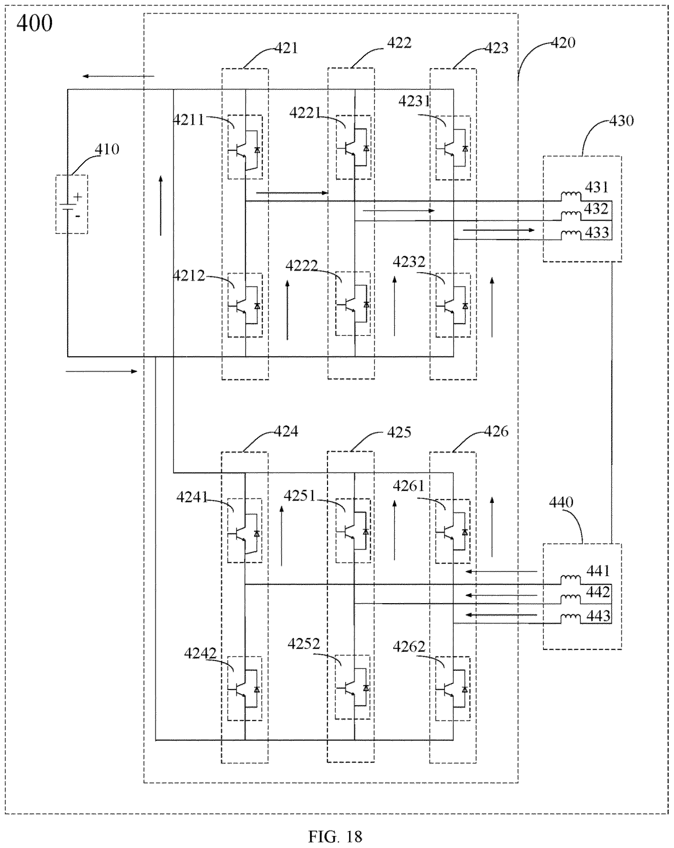

Procedure 4: controlling the upper bridge arm 4211 of the first bridge arm 421, the upper bridge arm 4221 of the second bridge arm 422, the upper bridge arm 4231 of the third bridge arm 423, the lower bridge arm 4242 of the fourth bridge arm 424, the lower bridge arm 4252 of the fifth bridge arm 425 and the lower bridge arm 4262 of the sixth bridge arm 426 to be turned off, and the lower bridge arm 4212 of the first bridge arm 421, the lower bridge arm 4222 of the second bridge arm 422, the lower bridge arm 4232 of the third bridge arm 423, the upper bridge arm 4241 of the fourth bridge arm 424, the upper bridge arm 4251 of the fifth bridge arm 425 and the upper bridge arm 4261 of the sixth bridge arm 426 to be turned on to form a loop among the power supply module 310, the lower bridge arm 4212 of the first bridge arm 421, the lower bridge arm 4222 of the second bridge arm 422, the lower bridge arm 4232 of the third bridge arm 423, the first motor 430, the second motor 440, the upper bridge arm 4241 of the fourth bridge arm 424, the upper bridge arm 4251 of the fifth bridge arm 425 and the upper bridge arm 4261 of the sixth bridge arm 426. The first motor 430 and the second motor 440 are discharged to the power supply module 410 through the loop, and the direction of current is shown in FIG. 18: 410(-)→(4212/3222/3232)→(431/332/333)→(4241/4251/4261)→(441/442/443)→410(+).

The process of heating the battery by the heating system 500 shown in FIG. 6 may include the following content.

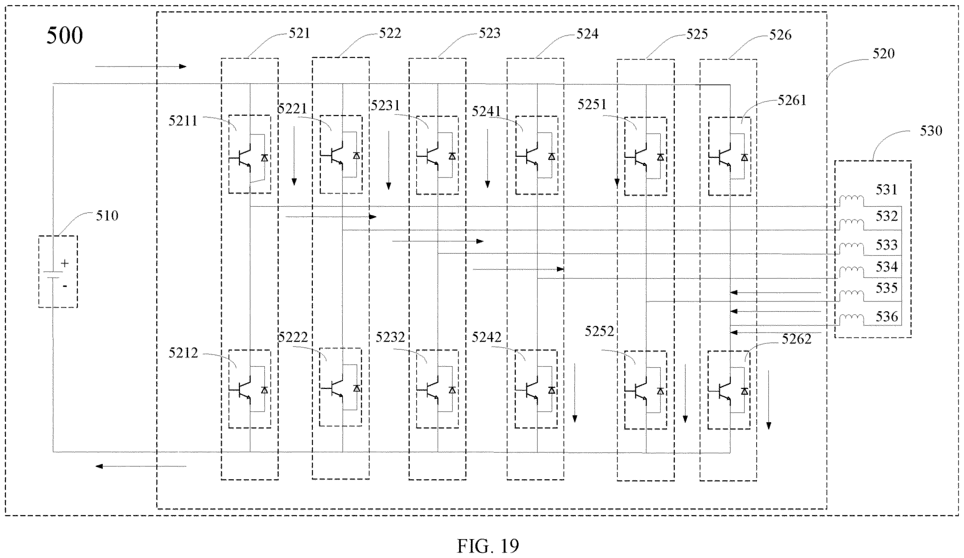

Procedure 1: controlling the upper bridge arm 5211 of the first bridge arm 521, the upper bridge arm 5221 of the second bridge arm 522, the upper bridge arm 5231 of the third bridge arm 523, the lower bridge arm 5242 of the fourth bridge arm 524, the lower bridge arm 5252 of the fifth bridge arm 525 and the lower bridge arm 5262 of the sixth bridge arm 526 to be turned on, and the lower bridge arm 5212 of the first bridge arm 521, the lower bridge arm 5222 of the second bridge arm 522, the lower bridge arm 5232 of the third bridge arm 523, the upper bridge arm 5241 of the fourth bridge arm 524, the upper bridge arm 5251 of the fifth bridge arm 525 and the upper bridge arm 5261 of the sixth bridge arm 526 to be turned off to form a loop among the power supply module 510, the upper bridge arm 5211 of the first bridge arm 521, the upper bridge arm 5221 of the second bridge arm 522, the upper bridge arm 5231 of the third bridge arm 523, the windings 531-533 in the motor 530, the windings 534-536 in the motor 530, the lower bridge arm 5242 of the fourth bridge arm 524, the lower bridge arm 5252 of the fifth bridge arm 525 and the lower bridge arm 5262 of the sixth bridge arm 526. The power supply module 510 charges the windings 531-536 in the motor 530 through the loop, and the direction of current is shown in FIG. 19: 510(+)→(5211/5221/3231)→(531/532/533)→(5242/5252/5262)→(534/535/536)→510(-).

Procedure 2: controlling the upper bridge arm 5211 of the first bridge arm 521, the upper bridge arm 5221 of the second bridge arm 522, the upper bridge arm 5231 of the third bridge arm 523, the lower bridge arm 5242 of the fourth bridge arm 524, the lower bridge arm 5252 of the fifth bridge arm 525 and the lower bridge arm 5262 of the sixth bridge arm 526 to be turned off, and the lower bridge arm 5212 of the first bridge arm 521, the lower bridge arm 5222 of the second bridge arm 522, the lower bridge arm 5232 of the third bridge arm 523, the upper bridge arm 5241 of the fourth bridge arm 524, the upper bridge arm 5251 of the fifth bridge arm 525 and the upper bridge arm 5261 of the sixth bridge arm 526 to be turned on to form a loop among the power supply module 510, the lower bridge arm 5212 of the first bridge arm 521, the lower bridge arm 5222 of the second bridge arm 522, the lower bridge arm 5232 of the third bridge arm 523, the windings 531-533 in the motor 530, the windings 534-536 in the motor 530, the upper bridge arm 5241 of the fourth bridge arm 524, the upper bridge arm 5251 of the fifth bridge arm 525 and the upper bridge arm 5261 of the sixth bridge arm 526.

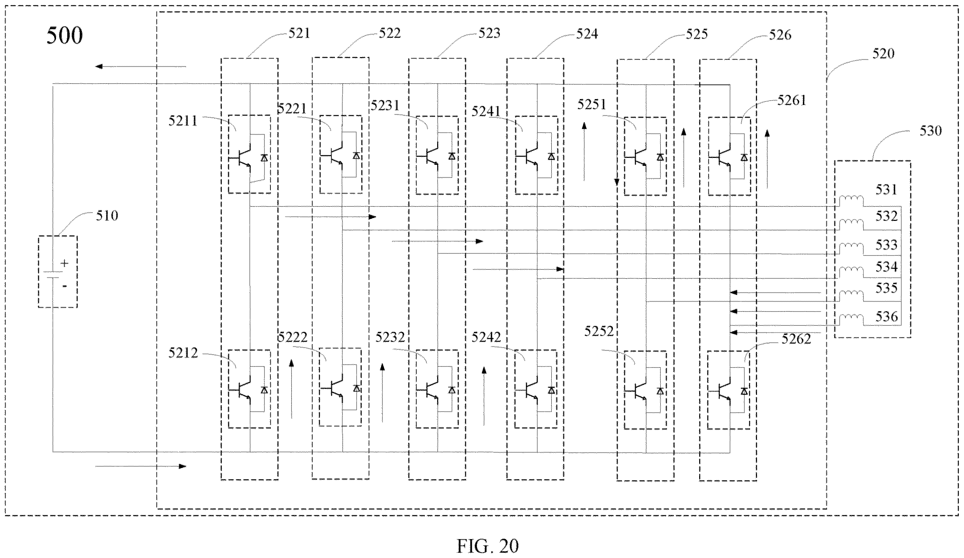

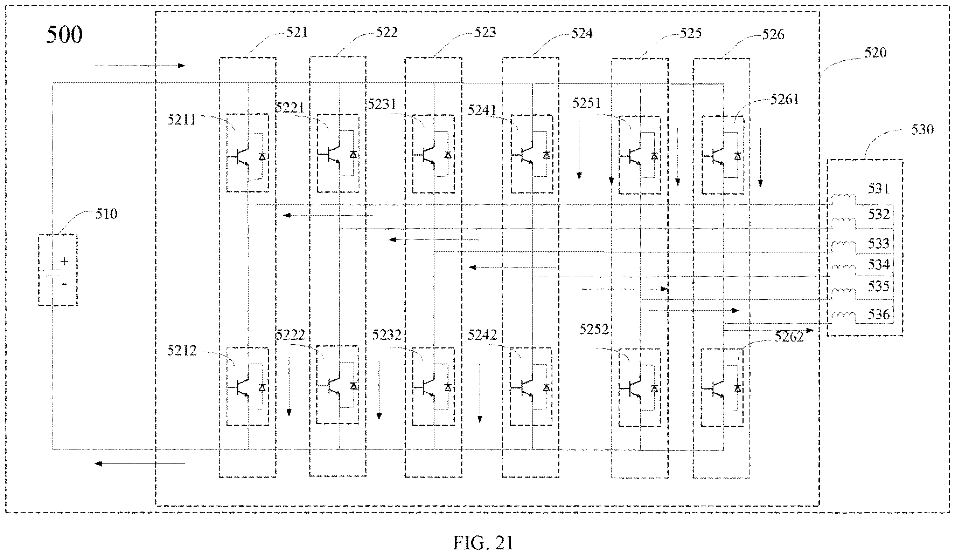

The duration of the procedure 2 is twice as long as that of the procedure 1. Thus, the direction of the current in the procedure 2 will be switched. Specifically, in the first half part of the procedure 2, the windings 531-533 in the motor 530 and the windings 534-536 in the motor 530 are discharged to the power supply module 510, and the direction of current is shown as FIG. 20: 510(-)→(5212/5222/3232)→(531/532/533)→(5241/5251/5261)→(534/535/536)→510(+); and in the second half part of the procedure 2, the windings 531-533 in the motor 530 and the windings 534-536 in the motor 530 are charged by the power supply module 410, and the direction of current is shown in FIG. 21: 510(+)→(5212/5222/3232)→(531/532/533)→(5241/5251/5261)→(534/535/536)→510(-).

Procedure 3: controlling the upper bridge arm 5211 of the first bridge arm 521, the upper bridge arm 5221 of the second bridge arm 522, the upper bridge arm 5231 of the third bridge arm 523, the lower bridge arm 5242 of the fourth bridge arm 524, the lower bridge arm 5252 of the fifth bridge arm 525 and the lower bridge arm 5262 of the sixth bridge arm 526 to be turned on, and the lower bridge arm 5212 of the first bridge arm 521, the lower bridge arm 5222 of the second bridge arm 522, the lower bridge arm 5232 of the third bridge arm 523, the upper bridge arm 5241 of the fourth bridge arm 524, the upper bridge arm 5251 of the fifth bridge arm 525 and the upper bridge arm 5261 of the sixth bridge arm 526 to be turned off to form a loop among the power supply module 510, the upper bridge arm 5211 of the first bridge arm 521, the upper bridge arm 5221 of the second bridge arm 522, the upper bridge arm 5231 of the third bridge arm 523, the windings 531-533 in the motor 530, the windings 534-536 in the motor 530, the lower bridge arm 5242 of the fourth bridge arm 524, the lower bridge arm 5252 of the fifth bridge arm 525 and the lower bridge arm 5262 of the sixth bridge arm 526.

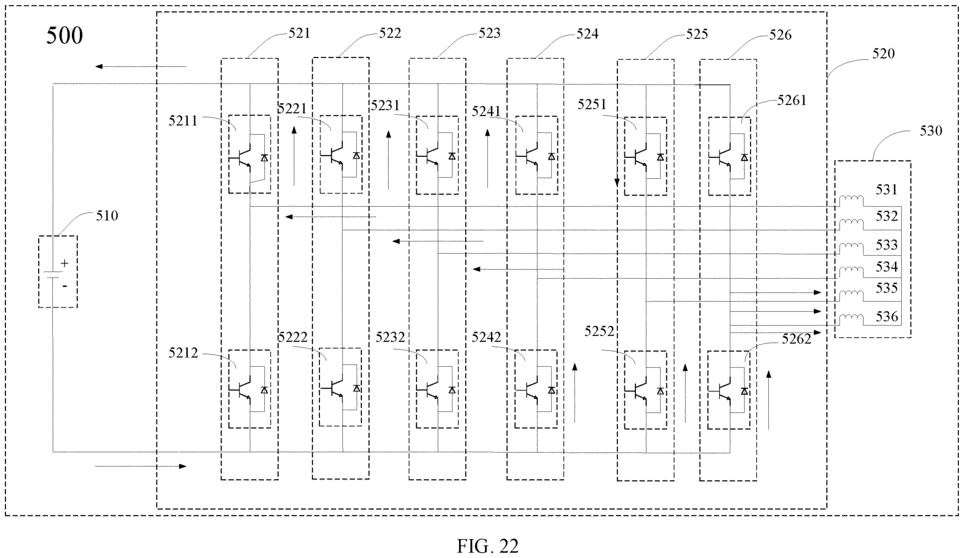

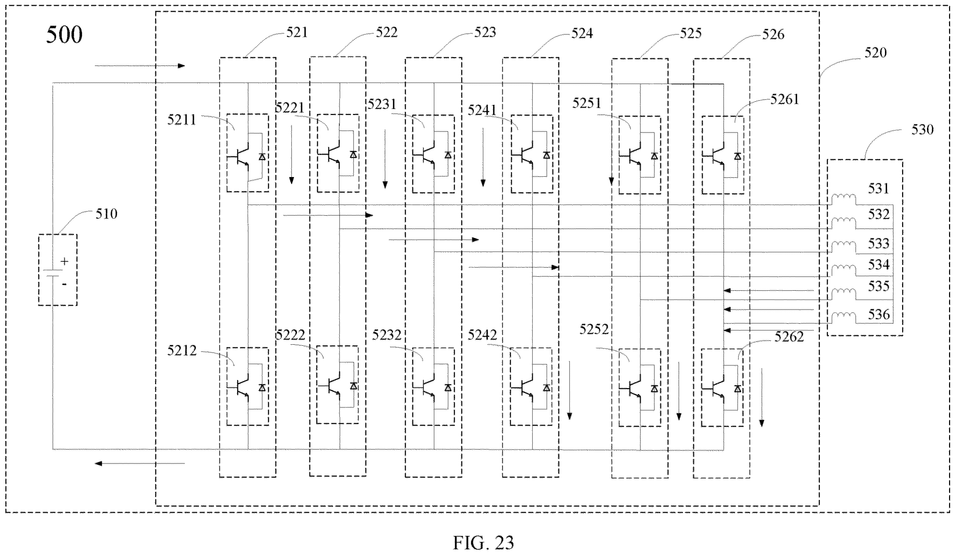

Similar to the procedure 2, as the duration of the procedure 3 is twice as long as that of the procedure 1, the direction of current will be switched in the procedure 3. Specifically, in the first half part of the procedure 3, the windings 531-533 in the motor 530 and the windings 534-536 in the motor 530 are discharged to the power supply module 510, and the direction of current is shown as FIG. 22: 510(-)→(5211/5221/3231)→(531/532/533)→(5242/5252/5262)→(534/535/536)→510(+); and in the second half part of the procedure 2, the windings 531-533 in the motor 530 and the windings 534-536 in the motor 530 are charged by the power supply module 410, and the direction of current is shown in FIG. 23: 510(+)→(5211/5221/3231)→(531/532/533)→(5242/5252/5262)→(534/535/536)→510(-).

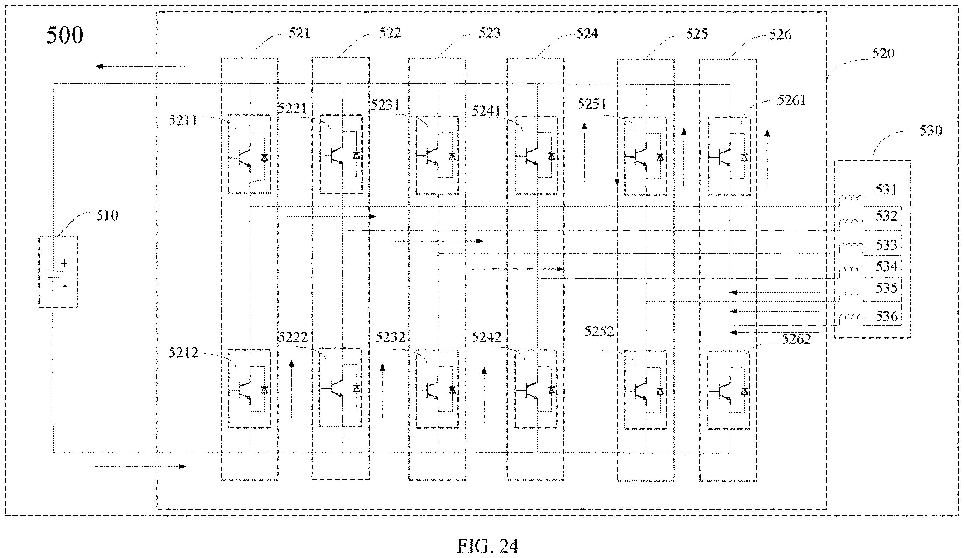

Procedure 4: controlling the upper bridge arm 5211 of the first bridge arm 521, the upper bridge arm 5221 of the second bridge arm 522, the upper bridge arm 5231 of the third bridge arm 523, the lower bridge arm 5242 of the fourth bridge arm 524, the lower bridge arm 5252 of the fifth bridge arm 525 and the lower bridge arm 5262 of the sixth bridge arm 526 to be turned off, and the lower bridge arm 5212 of the first bridge arm 521, the lower bridge arm 5222 of the second bridge arm 522, the lower bridge arm 5232 of the third bridge arm 523, the upper bridge arm 5241 of the fourth bridge arm 524, the upper bridge arm 5251 of the fifth bridge arm 525 and the upper bridge arm 5261 of the sixth bridge arm 526 to be turned on to form a loop among the power supply module 510, the lower bridge arm 5212 of the first bridge arm 521, the lower bridge arm 5222 of the second bridge arm 522, the lower bridge arm 5232 of the third bridge arm 523, the windings 531-533 in the motor 530, the windings 534-536 in the motor 530, the upper bridge arm 5241 of the fourth bridge arm 524, the upper bridge arm 5251 of the fifth bridge arm 525 and the upper bridge arm 5261 of the sixth bridge arm 526. The windings 531-533 in the motor 530 and the windings 534-536 in the motor 530 are discharged to the power supply module 510 through the loop, and the direction of current is shown in FIG. 24: 510(-)→(5212/5222/3232)→(531/532/533)→(5241/5251/5261)→(534/535/536)→510(+).

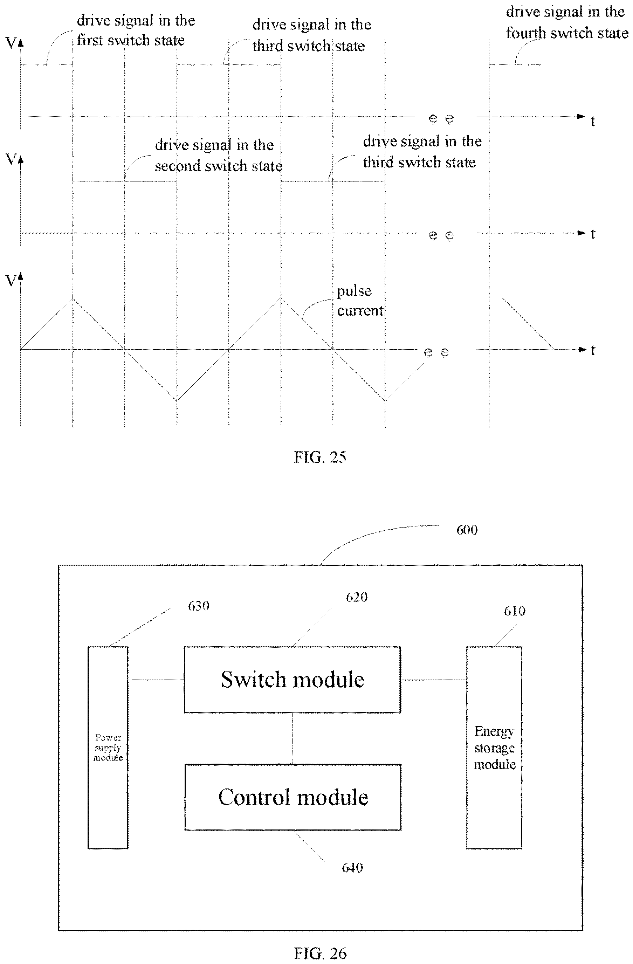

FIG. 25 is a sequence diagram of drive signal-pulse current in various switch states according to the embodiment of the present application. The drive signal is a signal for driving the switches in the switch module to be turned on. The flow direction of the pulse current can refer to the flow direction of current in motor inductors. For example, the flow direction of the pulse current can be the direction of current in the motor 330 in FIG. 7-FIG. 12, the direction of current in the first motor 430 in FIG. 13- FIG. 18 and the direction of current in the windings 531-533 in the motor 530 in FIG. 19-FIG. 24. In FIG. 25, the direction of current from left to right is a forward direction. As shown in FIG. 25, the frequency of the pulse current is twice as high as that of the drive signal. That is, the switching frequency of switches in the switch module can just need to reach f/2, and the frequency of the pulse current can reach f. The whole heating process of the battery can usually last 5 minutes or more. The frequency of the pulse current is generally hundreds of hertz. Procedures 1 and procedure 4 are performed only once, and their duration does not exceed 1 s in the whole heating process and is far less than that of performing procedures 2 and procedure 3. Thus, the scheme can reduce losses of the switch module to half of the losses produced by a traditional scheme, the service life of the switch module can be prolonged, and the temperature rise of the motor controller is greatly reduced.

In addition, it should be construed that, the problem of dead zones of the switch module is involved in the four procedures described above. For example, when procedure 2 is switched to procedure 3, it needs to take some time from drive signal receiving to complete turn-on. The dead zone time is just after the end of procedure 2. Procedure 3 can be performed after all the switches in the switch module are turned off for some time (time is very short, at us or ns level).

FIG. 26 is a schematic block diagram of the heating system 600 for the battery according to an embodiment of the present application. As shown in FIG. 26, the heating system 600 comprises an energy storage module 610, a switch module 620, a power supply module 630 and a control module 640; the control module 640 is configured to: alternately control the switch module to be in a first switch state within a first duration and in a second switch state within a second duration, both the first duration and the second duration being 2T; in the first switch state, form a first loop among the power supply module, the switch module and the energy storage module, discharge to the power supply module by the energy storage module through the first loop within the first half time T of the first duration, and charge the energy storage module by the power supply module through the first loop within the second half time T of the first duration; and in the second switch state, form a second loop among the power supply module, the switch module and the energy storage module, discharge to the power supply module by the energy storage module through the second loop within the first half time T of the second duration, and charge the energy storage module by the power supply module through the second loop within the second half time T of the second duration, the second loop differing from the first loop.

Optionally, in the embodiment of the present application, the control module 640 is further configured to: before alternately controlling the switch module to be in the first switch state within the first duration and in the second switch state within the second duration, control the switch module to be in a third switch state within a third duration, the third duration being T; and in the third switch state, form a third loop among the power supply module, the switch module and the energy storage module, and charge the energy storage module by the power supply module through the third loop within the third duration, wherein the third loop differs from a next loop of the third loop, and the next loop may be a loop formed by the power supply module, the switch module and the energy storage module in a case that the switch module switched from the third switch state to another switch state.

Optionally, in the embodiment of the present application, a next loop of the third loop is the first loop, and the third loop is the same as the second loop; or the next loop of the third loop is the second loop, and the third loop is the same as the first loop.

Optionally, in the embodiment of the present application, the control module 640 is further configured to: after alternately controlling the switch module to be in the first switch state within the first duration and in the second switch state within the second duration, control the switch module to be in a fourth switch state within a fourth duration, the fourth duration being T; after controlling the switch module to be in the fourth switch state, control all switches in the switch module to be turned off to stop heating the battery; in the fourth switch state, form a fourth loop among the power supply module, the switch module and the energy storage module, and discharge to the power supply module by the energy storage module through the fourth loop within the fourth duration, the fourth loop differing from a previous loop of the fourth loop, and the previous loop being a loop formed by the power supply module, the switch module and the energy storage module in a case that the switch module is switched to another switch state of the fourth switch state.

Optionally, in the embodiment of the present application, a previous loop of the fourth loop is the first loop, and the fourth loop is the same as the second loop; or the previous loop of the fourth loop is the second loop, and the fourth loop is the same as the first loop.

Optionally, in the embodiment of the present application, the energy storage module comprises a plurality of windings in the first motor and at least one inductor; the switch module comprises a first bridge arm group and a second bridge arm group, each bridge arm in the first bridge arm group and the second bridge arm group comprises upper and lower bridge arms separately, connection points of the upper and lower bridge arms of each bridge arm in the first bridge arm group are connected to each winding in the plurality of windings in one-to-one correspondence, connection points of the upper and lower bridge arms of each bridge arm in the second bridge arm group are connected to each inductor in the at least one inductor in one-to-one correspondence, and both the first bridge arm group and the second bridge arm group are connected to the power supply module in parallel; the control module 640 is specifically configured to: alternately control all the lower bridge arms in the first bridge arm group to be turned on, all the upper bridge arms in the first bridge arm group to be turned off, all the upper bridge arms in the second bridge arm group to be turned on, all the lower bridge arms in the second bridge arm group to be turned off, all the upper bridge arms in the first bridge arm group to be turned on, all the lower bridge arms in the first bridge arm group to be turned off, all the lower bridge arms in the second bridge arm group to be turned on and all the upper bridge arms in the second bridge arm group to be turned off, wherein in the first switch state, a first loop is formed among the power supply module, all the lower bridge arms in the first bridge arm group, the plurality of windings, the at least one inductor and all the upper bridge arms in the second bridge arm group; and in the second switch state, a second loop is formed among the power supply module, all the upper bridge arms in the first bridge arm group, the plurality of windings, the at least one inductor and all the lower bridge arms in the second bridge arm group.

Optionally, in the embodiments of the present application, the plurality of windings are all windings in the first motor, and the at least one inductor is an external inductor independent of the first motor and is connected to a neutral point of the first motor.

Optionally, in the embodiment of the present application, the plurality of windings are all windings in the first motor, the at least one inductor is all windings in a second motor, and the neutral point of the first motor is connected to a neutral point of the second motor.

Optionally, in the embodiment of the present application, the first motor is a three-phase motor.

Optionally, in the embodiment of the present application, the first motor is a six-phase motor, the plurality of windings are three windings in the six-phase motor, the at least one inductor is the other three windings in the six-phase motor, the spatial phase difference of the three windings is 120°, and the spatial phase difference of the other three windings is 120°.

Optionally, in the embodiment of the present application, the control module 640 is specifically configured to: control the switch module to be in the fourth switch state within the fourth duration in the case of determining to stop heating the battery.

Optionally, in the embodiment of the present application, the control module 640 is further configured to: determine whether to stop heating the battery according to the temperature of the battery.

Optionally, in the embodiment of the present application, the control module 640 is further configured to: determine the first duration and/or the second duration based on the temperature and/or SOC of the battery.

Optionally, in the embodiment of the present application, the power supply module 630 is the battery.

It should be construed that, the heating system 600 can correspond to any heating system in FIG. 4-FIG. 6, a concrete implementation of the heating system 600 can refer to the description of the heating system above in FIG. 4-FIG. 6, and is not described in detail for brevity.

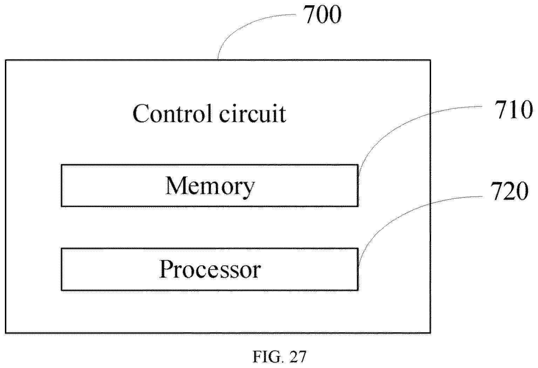

FIG. 27 is a schematic block diagram of a control circuit 700 of the heating system for the traction battery according to an embodiment of the present application. As shown in FIG. 27, the control circuit 700 comprises a processor 720, optionally, the control circuit 700 also comprises a memory 710, the memory 710 is configured to store instructions, and the processor 720 is configured to read the instructions and perform the above-mentioned methods in the embodiments of the present application based on the instructions.

Optionally, the processor 720 corresponds to the control module 640 of the heating system 600 shown in FIG. 26.

Optionally, the embodiment of the present application further provides an electric apparatus. The electric apparatus comprises a battery and any heating system described above. The heating system is configured to heat the battery. The battery supplies power to the electric apparatus.

Optionally, the electric apparatus is an electric vehicle.

An embodiment of the present application also provides a readable storage medium configured to store a computer program, the computer program is configured to perform the aforementioned methods of various embodiments of the present application.

Those of ordinary skill in the art may be aware that units, algorithms and steps in the examples described in conjunction with the embodiments of the present application disclosed herein can be realized through electronic hardware or combination of computer software and electronic hardware. Whether these functions are performed in the form of hardware or software depends on specific application and design constraint conditions of the technical scheme. Skilled artisans may implement the described functions of each specific application in different ways, but such implementation should not be interpreted as a departure from the scope of the present application.

Those skilled in the art can clearly understand that, for the convenience and brevity of description, the specific working process of the system, apparatus and unit described above may refer to the corresponding process in the foregoing method embodiments, which will not be repeated here.

In the several embodiments provided in the present application, it should be understood that the disclosed system, apparatus and method may be implemented in other manners. For example, the apparatus embodiments described above are only illustrative. For example, the division of units is only a logical function division. In actual implementation, there may be other division methods. For example, multiple units or components may be combined or integrated into another system, or some features may be omitted, or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the purposes of the schemes of the embodiments.

In addition, the functional units in the various embodiments of the present application may be integrated into one processing unit, or each unit may exist alone physically, or two or more units may be integrated into one unit.

The functions, if implemented in the form of software functional units and sold or used as separate products, may be stored in a computer readable storage medium. Based on such understanding, the technical solution of the present application, which is essential or contributes to the prior art, or a part of the technical solution, may be embodied in the form of a software product, which is stored in a storage medium, including a plurality of instructions used to cause a computer device (which may be a personal computer, server, or network device, etc.) to perform all or part of the steps of the methods described in various embodiments of the present application. The foregoing storage medium includes: a U disk, a mobile hard disk, a read-only memory (ROM), a random access memory (RAM), a magnetic disk, or an optical disk, and other various types of mediums, which can store program codes.

The above is only the specific embodiment of the present application, but the scope of the present application is not limited thereto, and any person skilled in the art can easily think of changes or substitutions within the technical scope of the present application. It should be covered by the scope of the present application. Therefore, the scope of the present application should be determined by the scope of the claims.

## Claims

1. A control method of a heating system for a battery, the heating system comprising an energy storage module, a switch module and a power supply module, and
the control method comprising:
alternately controlling the switch module to be in a first switch state within a first duration and in a second switch state within a second duration, both the first duration and the second duration being 2T;
in the first switch state, forming a first loop among the power supply module, the switch module and the energy storage module, discharging to the power supply module by the energy storage module through the first loop within the first half time T of the first duration, and charging the energy storage module by the power supply module through the first loop within the second half time T of the first duration; and
in the second switch state, forming a second loop among the power supply module, the switch module and the energy storage module, discharging to the power supply module by the energy storage module through the second loop within the first half time T of the second duration, and charging the energy storage module by the power supply module through the second loop within the second half time T of the second duration, the second loop differing from the first loop.

2. The control method according to claim 1, further comprising:
before alternately controlling the switch module to be in the first switch state within the first duration and in the second switch state within the second duration, controlling the switch module to be in a third switch state within a third duration, wherein the third duration is T; and
in the third switch state, forming a third loop among the power supply module, the switch module and the energy storage module, and charging the energy storage module by the power supply module through the third loop within the third duration, wherein the third loop differs from a next loop of the third loop, and the next loop is a loop formed by the power supply module, the switch module and the energy storage module in a case that the switch module is switched from the third switch state to another switch state.

3. The control method according to claim 2, wherein the next loop of the third loop is the first loop, and the third loop is the same as the second loop; or the next loop of the third loop is the second loop, and the third loop is the same as the first loop.

4. The control method according to any one of claims 1 to 3, further comprising:
after alternately controlling the switch module to be in the first switch state within the first duration and in the second switch state within the second duration, controlling the switch module to be in a fourth switch state within a fourth duration, the fourth duration being T;
after controlling the switch module to be in the fourth switch state, controlling all switches in the switch module to be turned off to stop heating the battery; and
in the fourth switch state, forming a fourth loop among the power supply module, the switch module and the energy storage module, and discharging to the power supply module by the energy storage module through the fourth loop within the fourth duration, wherein the fourth loop differs from a previous loop of the fourth loop, and the previous loop is a loop formed by the power supply module, the switch module and the energy storage module in a case that the switch module is switched to another switch state of the fourth switch state.

5. The control method according to claim 4, wherein the previous loop of the fourth loop is the first loop, and the fourth loop is the same as the second loop; or the previous loop of the fourth loop is the second loop, and the fourth loop is the same as the first loop.

6. The control method according to any one of claims 1 to 5, wherein the energy storage module comprises a plurality of windings in a first motor and at least one inductor, the switch module comprises a first bridge arm group and a second bridge arm group, each bridge arm in the first bridge arm group and the second bridge arm group comprises upper and lower bridge arms separately, connection points of the upper and lower bridge arms of each bridge arm in the first bridge arm group are connected to each winding in the plurality of windings in one-to-one correspondence, connection points of the upper and lower bridge arms of each bridge arm in the second bridge arm group are connected to each inductor in the at least one inductor in one-to-one correspondence, and both the first bridge arm group and the second bridge arm group are connected to the power supply module in parallel; and
the alternately controlling the switch module to be in a first switch state within a first duration and in a second switch state within a second duration comprises:
alternately controlling all the lower bridge arms in the first bridge arm group to be turned on, all the upper bridge arms in the first bridge arm group to be turned off, all the upper bridge arms in the second bridge arm group to be turned on, and all the lower bridge arms in the second bridge arm group to be turned off, and all the upper bridge arms in the first bridge arm group to be turned on, all the lower bridge arms in the first bridge arm group to be turned off, all the lower bridge arms in the second bridge arm group to be turned on and all the upper bridge arms in the second bridge arm group to be turned off,
wherein in the first switch state, the first loop is formed among the power supply module, all the lower bridge arms in the first bridge arm group, the plurality of windings, the at least one inductor and all the upper bridge arms in the second bridge arm group; and in the second switch state, the second loop is formed among the power supply module, all the upper bridge arms in the first bridge arm group, the plurality of windings, the at least one inductor and all the lower bridge arms in the second bridge arm group.

7. The control method according to claim 6, wherein the plurality of windings are all windings in the first motor, the at least one inductor is an external inductor independent of the first motor, and the at least one inductor is connected to a neutral point of the first motor.

8. The control method according to claim 6, wherein the plurality of windings are all windings in the first motor, the at least one inductor is all windings in a second motor, and the neutral point of the first motor is connected to a neutral point of the second motor.

9. The control method according to claim 7 or 8, wherein the first motor is a three-phase motor.

10. The control method according to claim 6, wherein the first motor is a six-phase motor, the plurality of windings are three windings in the six-phase motor, the at least one inductor is the other three windings in the six-phase motor, the spatial phase difference of the three windings is 120°, and the spatial phase difference of the other three windings is 120°.

11. The control method according to claim 4 or 5, wherein the controlling the switch module to be in a fourth switch state within a fourth duration comprises:
controlling the switch module to be in the fourth switch state within the fourth duration in the case of determining to stop heating the battery.

12. The control method according to claim 11, further comprising:
determining whether to stop heating the battery according to the temperature of the battery.

13. The control method according to any one of claims 1 to 12, further comprising:
determining the first duration and/or the second duration based on the temperature and/or the state of charge (SOC) of the battery.

14. The control method according to any one of claims 1 to 13, wherein the power supply module is the battery.

15. A heating system for a battery, comprising an energy storage module, a switch module, a power supply module and a control module,
wherein the control module is configured to:
alternately control the switch module to be in a first switch state within a first duration and in a second switch state within a second duration, both the first duration and the second duration being 2T;
in the first switch state, form a first loop among the power supply module, the switch module and the energy storage module, discharge to the power supply module by the energy storage module through the first loop within the first half time T of the first duration, and charge the energy storage module by the power supply module through the first loop within the second half time T of the first duration; and
in the second switch state, form a second loop among the power supply module, the switch module and the energy storage module, discharge to the power supply module by the energy storage module through the second loop within the first half time T of the second duration, and charge the energy storage module by the power supply module through the second loop within the second half time T of the second duration, wherein the second loop differs from the first loop.

16. The heating system according to claim 15, wherein the control module is further configured to:
before alternately controlling the switch module to be in the first switch state within the first duration and in the second switch state within the second duration, control the switch module to be in a third switch state within a third duration, the third duration being T;
in the third switch state, form a third loop among the power supply module, the switch module and the energy storage module, and charge the energy storage module by the power supply module through the third loop within the third duration, the third loop differing from a next loop of the third loop, and the next loop being a loop formed by the power supply module, the switch module and the energy storage module in a case that the third switch state is switched to another switch state.

17. The heating system according to claim 16, wherein the next loop of the third loop is the first loop, and the third loop is the same as the second loop; or the next loop of the third loop is the second loop, and the third loop is the same as the first loop.

18. The heating system according to any one of claims 15 to 17, wherein the control module is further configured to:
after alternately controlling the switch module to be in the first switch state within the first duration and in the second switch state within the second duration, controlling the switch module to be in a fourth switch state within a fourth duration, the fourth duration being T;
after controlling the switch module to be in the fourth switch state, control all switches in the switch module to be turned off to stop heating the battery; and
in the fourth switch state, form a fourth loop among the power supply module, the switch module and the energy storage module, discharge to the power supply module by the energy storage module through the fourth loop within the fourth duration, the fourth loop differing from a previous loop of the fourth loop, and the previous loop being a loop formed by the power supply module, the switch module and the energy storage module in a case of being switched to another switch state of the fourth switch state.

19. The heating system according to claim 18, wherein the previous loop of the fourth loop is the first loop, and the fourth loop is the same as the second loop; or the previous loop of the fourth loop is the second loop, and the fourth loop is the same as the first loop.

20. The heating system according to any one of claims 15 to 19, wherein the energy storage module comprises a plurality of windings in the first motor and at least one inductor, the switch module comprises a first bridge arm group and a second bridge arm group, each bridge arm in the first bridge arm group and the second bridge arm group comprises upper and lower bridge arms separately, connection points of the upper and lower bridge arms of each bridge arm in the first bridge arm group are connected to each winding in the plurality of windings in one-to-one correspondence, connection points of the upper and lower bridge arms of each bridge arm in the second bridge arm group are connected to each inductor in the at least one inductor in one-to-one correspondence, and both the first bridge arm group and the second bridge arm group are connected to the power supply module in parallel; and
the control module is specifically configured to:
alternately control all the lower bridge arms in the first bridge arm group to be turned on, all the upper bridge arms in the first bridge arm group to be turned off, all the upper bridge arms in the second bridge arm group to be turned on, and all the lower bridge arms in the second bridge arm group to be turned off, and all the upper bridge arms in the first bridge arm group to be turned on, all the lower bridge arms in the first bridge arm group to be turned off, all the lower bridge arms in the second bridge arm group to be turned on and all the upper bridge arms in the second bridge arm group to be turned off,
wherein in the first switch state, the first loop is formed among the power supply module, all the lower bridge arms in the first bridge arm group, the plurality of windings, the at least one inductor and all the upper bridge arms in the second bridge arm group; and in the second switch state, the second loop is formed among the power supply module, all the upper bridge arms in the first bridge arm group, the plurality of windings, the at least one inductor and all the lower bridge arms in the second bridge arm group.

21. The heating system according to claim 20, wherein the plurality of windings are all windings in the first motor, the at least one inductor is an external inductor independent of the first motor, and the at least one inductor is connected to a neutral point of the first motor.

22. The heating system according to claim 20, wherein the plurality of windings are all windings in the first motor, the at least one inductor is all windings in the second motor, and the neutral point of the first motor is connected to a neutral point of the second motor.

23. The heating system according to claim 21 or 22, wherein the first motor is a three-phase motor.

24. The heating system according to claim 20, wherein the first motor is a six-phase motor, the plurality of windings are three windings in the six-phase motor, the at least one inductor is the other three windings in the six-phase motor, the spatial phase difference of the three windings is 120°, and the spatial phase difference of the other three windings is 120°.

25. The heating system according to claim 18 or 19, wherein the control module is specifically configured to:
control the switch module to be in the fourth switch state within the fourth duration in the case of determining to stop heating the battery.

26. The heating system according to claim 25, wherein the control module is further configured to:
determine whether to stop heating the battery according to the temperature of the battery.

27. The heating system according to any one of claims 15 to 26, wherein the control module is further configured to:
determine the first duration and/or the second duration based on the temperature and/or the SOC of the battery.

28. The heating system according to any one of claims 15 to 27, wherein the power supply module is the battery.

29. A control circuit of a heating system for a battery, wherein a processor is configured to perform the control method of any one of claims 1 to 14.

30. An electric apparatus, comprising a battery and the heating system of any one of claims 15-28, wherein the heating system is configured to heat the battery, and the battery is configured to supply power to the electric apparatus.
